(19) **Europäisches Patentamt**
**European Patent Office**
**Office européen des brevets**

(11) **EP 4 009 728 A1**

(12) **EUROPEAN PATENT APPLICATION**
published in accordance with Art. 153(4) EPC

(43) Date of publication:
**08.06.2022 Bulletin 2022/23**

(21) Application number: **20850739.2**

(22) Date of filing: **31.07.2020**

(51) International Patent Classification (IPC):
***H04W 72/12*** (2009.01)

(52) Cooperative Patent Classification (CPC):
**H04W 52/02; H04W 72/12; Y02D 30/70**

(86) International application number:
**PCT/CN2020/106443**

(87) International publication number:
**WO 2021/023130 (11.02.2021 Gazette 2021/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.08.2019 CN 201910711769**

(71) Applicant: **Huawei Technologies Co., Ltd.**
**Longgang District**
**Shenzhen,**
**Guangdong 518129 (CN)**

(72) Inventors:
• **HUANG, Wenwen**
**Shenzhen, Guangdong 518129 (CN)**
• **TIE, Xiaolei**
**Shenzhen, Guangdong 518129 (CN)**
• **HUA, Meng**
**Shenzhen, Guangdong 518129 (CN)**

(74) Representative: **Maiwald Patent- und Rechtsanwaltsgesellschaft mbH**
**Elisenhof**
**Elisenstraße 3**
**80335 München (DE)**

(54) **COMMUNICATION TRANSMISSION METHOD AND DEVICE**

(57) Embodiments of this application disclose a communication transmission method and a device. The method includes: receiving, by a terminal device, a minimum scheduling slot offset indicated by a network device; receiving, by the terminal device, indication information sent by the network device; or sending, by the terminal device, indication information to the network device, where the indication information is used to determine a first receiving state used by the terminal device to detect a PDCCH; and detecting, by the terminal device, the PDCCH by using the first receiving state when the minimum scheduling slot offset is greater than 0. According to the method, after the terminal device turns off some antennas, and before the network device sends the PDCCH to the terminal device, the network device adjusts the PDCCH to be sent to the terminal device, to ensure that the terminal device can normally receive, after turning off the some antennas to reduce power consumption, the PDCCH sent by the network device.

FIG. 3

EP 4 009 728 A1

**Description**

**CROSS-REFERENCE TO RELATED APPLICATIONS**

This application claims priority to Chinese Patent Application No. 201910711769.7, filed with the China National Intellectual Property Administration on August 2, 2019 and entitled "COMMUNICATION TRANSMISSION METHOD", which is incorporated herein by reference in its entirety.

**TECHNICAL FIELD**

This application relates to the field of communication technologies, and in particular, to a communication transmission method and a device.

**BACKGROUND**

With continuous development of communication technologies, in a wireless communication process, more attention is paid to reducing power consumption of a terminal device. To reduce the power consumption of the terminal device in the wireless communication process and better save power of the terminal device, the terminal device may reduce the power consumption of the terminal device in aspects of a time domain, a space domain, and the like.

In a conventional technology, when the power consumption of the terminal device is reduced in time domain, the power consumption of the terminal device is reduced mainly in a cross-slot scheduling manner. That is, a base station schedules a physical downlink shared channel (Physical Downlink Shared Channel, PDSCH) for UE by using a physical downlink control channel (Physical Downlink Control Channel, PDCCH), and a slot offset between the PDCCH and the scheduled PDSCH is greater than 0. Because the terminal device learns, before detecting the PDCCH, that the scheduled PDSCH and the PDCCH are not in a same slot, the terminal device may reduce unnecessary data buffering and relax processing time of the PDCCH, to reduce the power consumption. When the power consumption of the terminal device is reduced in space domain, the power consumption of the terminal device is reduced by turning off some antennas. In a method, the terminal device turns off the some receive antennas when detecting the PDCCH, and then turns on, after obtaining the PDCCH through detection, more receive antennas to receive the scheduled PDSCH. Because switching time is required for the terminal device to turn on or turn off a receive antenna, the terminal device may reduce the power consumption of the terminal device in space domain through internal implementation if the slot offset between the PDCCH and the scheduled PDSCH satisfies the antenna switching time in the cross-slot scheduling manner in the conventional technology.

A main problem of the foregoing method in which the terminal device reduces the power consumption in space domain through internal implementation is that in a communication process, the base station does not learn of a change in a quantity of antennas used by the terminal device to receive the PDCCH. Therefore, when the terminal device switches the receive antenna quantity to reduce the power consumption, for example, when the terminal device uses two receive antennas (2Rx) after switching, the base station still considers that the terminal device uses 4Rx, and therefore PDCCH parameter selection when the base station sends the PDCCH is inappropriate, for example, aggregation level (aggregation level, AL) selection is inappropriate. Consequently, performance of detecting the PDCCH by the terminal device deteriorates, and so on.

**SUMMARY**

This application provides a communication transmission method and a device, to effectively reduce power consumption of a terminal device without affecting PDCCH performance.

According to a first aspect, an embodiment of this application provides a communication transmission method. A terminal device receives a minimum scheduling slot offset indicated by a network device. The terminal device receives first indication information sent by the network device; or the terminal device sends second indication information to the network device. The terminal device detects a PDCCH by using a first receiving state when the minimum scheduling slot offset is greater than 0. Optionally, the first indication information and/or the second indication information are/is used to determine the first receiving state used by the terminal device to detect the PDCCH. Alternatively, optionally, the first indication information and/or the second indication information are/is used to determine a first antenna quantity used by the terminal device to detect the PDCCH, where the first antenna quantity is less than a maximum receive antenna quantity configured or supported by the terminal device.

Based on this solution, in this embodiment of this application, when power consumption of the terminal device is reduced by switching a current receiving state to the first receiving state, if the terminal device receives indication information sent by the network device, the terminal device determines that the PDCCH may be detected by using the first receiving state; or the terminal device sends indication information to the network device if the terminal device determines that the current receiving state needs to be switched to the first receiving state. That is, the network device and the terminal device notify each other by sending the indication information to each other, so that the network device learns that the terminal device detects the PDCCH by using the first receiving state, to ensure that the terminal device can normally receive, when reducing the power consumption of the terminal device by switching the current receiving state to the first receiving state, the PDCCH sent by the network device.

Correspondingly, the first indication information includes at least one of the following: when the network device needs to send the PDCCH to the terminal device, the network device compensates for the to-be-sent PDCCH; the terminal device reports information about channel state information (Channel State Information, CSI) and/or channel quality indicators (Channel Quality Indicator, CQI) in at least two receiving states; or a compensation factor used to assist the network device in determining a parameter of the PDCCH.

Based on this solution, this embodiment of this application provides several cases of the first indication information received by the terminal device and sent by the network device. For example, the indication information mainly indicates that the network device compensates for the to-be-sent PDCCH, that is, it can be ensured that the terminal device normally receives the PDCCH in the first receiving state, so that the terminal device can switch the current receiving state to the first receiving state when receiving the indication information. For another example, the indication information indicates that the terminal device reports the information about the CSI and/or the CQIs measured by using at least two antenna quantities, so that the network device can learn of the information about the CSI and/or the CQIs measured by using the at least two antenna quantities, which helps the terminal device normally receive the PDCCH in the first receiving state.

In a possible implementation, the second indication information indicates at least one of the following: a compensation factor used to assist the network device in determining a parameter of the PDCCH; information that is about CSI and/or CQIs in at least two receiving states and that is determined by the terminal device; or the network device compensates for the PDCCH when sending the PDCCH to the terminal device.

Based on this solution, this embodiment of this application specifically describes cases of the second indication information sent by the terminal device to the network device. The second indication information indicates the compensation factor of the parameter of the PDCCH, so that the network device can adjust, based on the compensation factor in the indication information after receiving the indication information, the PDCCH to be sent to the terminal device, to ensure that the terminal device normally receives the PDCCH in the first receiving state.

In a possible implementation, the terminal device detects the PDCCH by using the first receiving state when the minimum scheduling slot offset is not less than Y, where Y is time required for the terminal device to turn on and/or turn off an antenna.

Based on this solution, in this embodiment of this application, to ensure that the terminal device has sufficient time to switch a receiving state, the minimum scheduling slot offset needs to be greater than the time required for the terminal device to turn on and/or turn off the antenna.

In a possible implementation, before the terminal device reports the information about at least two types of the CSI and/or the CQIs to the network device, the method further includes: receiving, by the terminal device, a signal state information reference signal CSI-RS by using the maximum receive antenna quantity configured or supported by the terminal device, and calculating N pieces of CSI and/or N CQIs that correspond to N receiving states; and reporting, by the terminal device, the N pieces of CSI and/or N CQIs to the network device, where the N receiving states include the first receiving state.

Based on this solution, in this embodiment of this application, the terminal device reports, to the network device, the CSI and/or the CQIs that correspond to N antenna quantities, so that the network device can learn of the CSI and/or the CQIs that correspond to the N antenna quantities, and selects one piece of CSI based on an actual case to determine the PDCCH to be sent to the terminal device. Applicability is stronger.

In a possible implementation, before the terminal device reports the information about at least two types of the CSI and/or the CQIs, the method further includes: receiving, by the terminal device, a CSI-RS by using a second receiving state, and calculating first CSI and/or a first CQI that correspond/corresponds to the first receiving state and second CSI and/or a second CQI that correspond/corresponds to the second receiving state; and using, by the terminal device, the first CSI and/or the first CQI and the second CSI and/or the second CQI as the CSI and/or the CQIs that are reported to the network device, where the first receive antenna quantity corresponding to the first receiving state is less than a second antenna quantity corresponding to the second receiving state, and the second antenna quantity is not greater than the maximum receive antenna quantity configured or supported by the terminal device.

Based on this solution, in this embodiment of this application, the network device indicates the terminal device to report the information about the CSI and/or the CQIs measured by using the at least two antenna quantities, where the information includes the first CSI and/or the first CQI that correspond/corresponds to the first antenna quantity and the second CSI and/or the second CQI that correspond/corresponds to the second antenna quantity, so that the network device can determine, based on the received first CSI and/or first CQI, the PDCCH to be sent to the terminal device, to ensure that the terminal device normally receives the PDCCH in the first receiving state.

In a possible implementation, the first indication information includes the compensation factor used to assist the network device in determining the parameter of the PDCCH.

Based on this solution, in this embodiment of this application, the terminal device may determine, based on the compensation factor in the received first indication information, whether the PDCCH that the network device compensates for based on the compensation factor can be normally received by using the first receiving state. If the PDCCH cannot be normally received by using the first receiving state, the terminal device does not switch the receiving state; or if the PDCCH can be normally received by using the first receiving state, the terminal device switches the current receiving state to the first receiving state.

In a possible implementation, if the terminal device does not receive, within threshold duration, information that is for requesting data scheduling and that is sent by the network device, the terminal device detects the PDCCH by using the first receiving state when the minimum scheduling slot offset is greater than 0.

Based on this solution, in this embodiment of this application, a condition for switching to the first receiving state is determined by setting the threshold duration, that is, if the terminal device does not receive, within the threshold duration, the information that is for requesting data scheduling and that is sent by the network device, the terminal device detects the PDCCH by using the first receiving state when the minimum scheduling slot offset is greater than 0.

According to a second aspect, an embodiment of this application further provides a communication transmission method. A network device indicates a minimum scheduling slot offset to a terminal device. The network device receives second indication information sent by the terminal device; or the network device sends first indication information to the terminal device. The network device sends, to the terminal device when the minimum scheduling slot offset is greater than 0 and the network device needs to send a PDCCH to the terminal device, a PDCCH applicable to being received in a first receiving state. Optionally, the first indication information and/or the second indication information are/is used to determine the first receiving state used by the terminal device to detect a PDCCH. Alternatively, optionally, the first indication information and/or the second indication information are/is used to determine a first antenna quantity used by the terminal device to detect the PDCCH, where the first antenna quantity is less than a maximum receive antenna quantity configured or supported by the terminal device.

Based on this solution, in this embodiment of this application, when power consumption of the terminal device is reduced by switching a current receiving state to the first receiving state, if the terminal device receives indication information sent by the network device, the terminal device determines that the PDCCH may be detected by using the first receiving state; or the terminal device sends indication information to the network device if the terminal device determines that the current receiving state needs to be switched to the first receiving state. That is, the network device and the terminal device notify each other by sending the indication information to each other, so that the network device learns that the terminal device detects the PDCCH by using the first receiving state, to ensure that the terminal device can normally receive, when reducing the power consumption of the terminal device by switching the current receiving state to the first receiving state, the PDCCH sent by the network device.

In a possible implementation, the first indication information includes at least one of the following: when the network device needs to send the PDCCH to the terminal device, the network device compensates for the to-be-sent PDCCH; the terminal device reports information about channel state information CSI and/or channel quality indicators CQIs in at least two receiving states; or a compensation factor used to assist the network device in determining a parameter of the PDCCH.

Based on this solution, this embodiment of this application provides several cases of the first indication information sent by the network device to the terminal device. For example, the indication information mainly indicates that the network device compensates for the to-be-sent PDCCH, that is, it can be ensured that the terminal device normally receives the PDCCH in the first receiving state, so that the terminal device can switch the current receiving state to the first receiving state when receiving the indication information. For another example, the indication information indicates that the terminal device reports the information about the CSI and/or the CQIs measured by using at least two antenna quantities, so that the network device can learn of the information about the CSI and/or the CQIs measured by using the at least two antenna quantities, which helps the terminal device normally receive the PDCCH in the first receiving state.

In a possible implementation, the second indication information indicates at least one of the following: a compensation factor used to assist the network device in determining a parameter of the PDCCH; information that is about CSI and/or CQIs in at least two receiving states and that is determined by the terminal device; or the network device compensates for the PDCCH when sending the PDCCH to the terminal device.

Based on this solution, this embodiment of this application specifically describes cases of the second indication information received by the network device and sent by the terminal device. The indication information indicates the compensation factor of the parameter of the PDCCH, so that the network device can adjust, based on the compensation factor in the indication information after receiving the indication information, the PDCCH to be sent to the terminal device, to ensure that the terminal device normally receives the PDCCH in the first receiving state.

In a possible implementation, the network device sends, to the terminal device when the minimum scheduling slot offset is not less than Y and the network device needs to send the PDCCH to the terminal device, the PDCCH applicable to being received in the first receiving state, where Y is time required for the terminal device to turn on and/or turn off an antenna.

Based on this solution, in this embodiment of this application, to ensure that the terminal device has sufficient time to switch a receiving state, the minimum scheduling slot offset needs to be greater than the time required for the terminal device to turn on and/or turn off the antenna.

In a possible implementation, that the network device receives the information about the CSI and/or the CQIs in the at least two receiving states that is reported by the terminal device includes: receiving, by the network device, N pieces of CSI and/or N CQIs reported by the terminal device, where the N pieces of CSI and/or the N CQIs are obtained through measurement after the terminal device receives a CSI-RS by using the configured or supported maximum receive antenna quantity, and the N pieces of CSI and/or the N CQIs include CSI and/or a CQI that correspond/corresponds to the first receiving state.

Based on this solution, in this embodiment of this application, the network device may select, based on an actual case, one piece of CSI from the N pieces of CSI and/or the N CQIs reported by the terminal device, to determine the parameter of the PDCCH to be sent to the terminal device. In addition, the N pieces of CSI and/or the N CQIs include CSI and/or a CQI that correspond/corresponds to the first antenna quantity. Therefore, the network device may determine, based on the CSI and/or the CQI that correspond/corresponds to the first antenna quantity, the PDCCH to be sent to the terminal device, to ensure that the terminal device normally receives the PDCCH in the first receiving state.

In a possible implementation, that the network device receives the information about the CSI and/or the CQIs in the at least two receiving states that is reported by the terminal device includes: receiving, by the network device, first CSI and/or a first CQI that correspond/corresponds to the first antenna quantity and second CSI and/or a second CQI that correspond/corresponds to a second antenna quantity that are reported by the terminal device, where the first CSI and/or the first CQI and the second CSI and/or the second CQI are obtained through calculation after the terminal device receives a CSI-RS by using a second receiving state, the first antenna quantity corresponding to the first receiving state is less than the second antenna quantity corresponding to the second receiving state, and the second antenna quantity is not greater than the maximum receive antenna quantity configured or supported by the terminal device.

Based on this solution, in this embodiment of this application, the network device may learn, based on the first CSI and/or the first CQI that correspond/corresponds to the first antenna quantity and the second CSI and/or the second CQI that correspond/corresponds to the second antenna quantity that are reported by the terminal device, of the first CSI and/or the first CQI that correspond/corresponds to the first antenna quantity. Therefore, the network device may determine, based on the CSI and/or the CQI that correspond/corresponds to the first antenna quantity, the PDCCH to be sent to the terminal device, to ensure that the terminal device normally receives the PDCCH in the first receiving state.

In a possible implementation, the first indication information includes the compensation factor used to assist the network device in determining the parameter of the PDCCH.

Based on this solution, in this embodiment of this application, the terminal device may determine, based on the compensation factor in the received first indication information, whether the PDCCH that the network device compensates for based on the compensation factor can be normally received by using the first receiving state. If the PDCCH cannot be normally received by using the first receiving state, the terminal device does not switch the receiving state; or if the PDCCH can be normally received by using the first receiving state, the terminal device switches the current receiving state to the first receiving state.

In a possible implementation, before the network device sends, to the terminal device when the minimum scheduling slot offset is greater than 0 and the network device needs to send a PDCCH to the terminal device, a PDCCH applicable to being received in a first receiving state, the network device determines a parameter of the PDCCH applicable to being received in the first receiving state.

Based on this solution, in this embodiment of this application, the parameter of the PDCCH applicable to being received in the first receiving state needs to be determined, to ensure that when the terminal device is in the first receiving state, the network device sends, to the terminal device, the PDCCH applicable to being received in the first receiving state, so that the terminal device normally receives the PDCCH.

In a possible implementation, if the network device does not send, to the terminal device within threshold duration, information for requesting data scheduling, the network device compensates, when the minimum scheduling slot offset is greater than 0, for the PDCCH to be sent to the terminal device.

Based on this solution, in this embodiment of this application, a condition for compensating for the to-be-sent PDCCH is determined by setting the threshold duration, that is, if the network device does not send, to the terminal device within the threshold duration, the information for requesting data scheduling, the network device compensates, when the minimum scheduling slot offset is greater than 0, for the PDCCH to be sent to the terminal device.

In a possible implementation, the network device determines, in the following manner, the parameter of the PDCCH applicable to the first receiving state: determining, by the network device based on a predefined compensation factor, the parameter of the PDCCH applicable to the first receiving state; determining, by the network device based on the second indication information sent by the terminal device, the parameter of the PDCCH applicable to the first receiving state; determining, by the network device based on the compensation factor configured by the network device, the parameter of the PDCCH applicable to the first receiving state; or determining, by the network device based on information that is reported by the terminal device and that includes the CSI and/or the CQI that correspond/corresponds to the first receiving state, the PDCCH applicable to the first receiving state.

Based on this solution, the methods for determining, by the network device, the PDCCH applicable to being received in the first receiving state are described in detail in this embodiment of this application. For example, the network device determines, based on the predefined compensation factor, the parameter of the PDCCH applicable to the first receiving state; the network device determines, based on the second indication information sent by the terminal device, the parameter of the PDCCH applicable to the first receiving state; the network device determines, based on the compensation factor configured by the network device, the parameter of the PDCCH applicable to the first receiving state; or the network device determines, based on the information that is reported by the terminal device and that includes the CSI and/or the CQI that correspond/corresponds to the first receiving state, the parameter of the PDCCH applicable to the first receiving state.

According to a third aspect, an embodiment of this application further provides a terminal device. The terminal device may be configured to perform the operation in any one of the first aspect or the possible implementations of the first aspect. For example, the terminal device may include a module or a unit configured to perform each operation in any one of the first aspect or the possible implementations of the first aspect. For example, the terminal device includes a processing unit and a communication unit.

According to a fourth aspect, an embodiment of this application further provides a network device. The network device may be configured to perform the operation in any one of the second aspect or the possible implementations of the second aspect. For example, the network device may include a module or a unit configured to perform each operation in any one of the second aspect or the possible implementations of the second aspect. For example, the network device includes a processing unit and a communication unit.

According to a fifth aspect, an embodiment of this application further provides a terminal device. The device includes a processor and a transceiver, and optionally further includes a memory. The processor, the transceiver, and the memory communicate with each other through an internal connection path. The memory is configured to store instructions. The processor is configured to execute the instructions stored in the memory. When the processor executes the instructions stored in the memory, the terminal device is enabled to perform any method according to any one of the first aspect or the possible implementations of the first aspect.

According to a sixth aspect, an embodiment of this application further provides a network device. The device includes a processor and a transceiver, and optionally further includes a memory. The processor, the transceiver, and the memory communicate with each other through an internal connection path. The memory is configured to store instructions. The processor is configured to execute the instructions stored in the memory. When the processor executes the instructions stored in the memory, the network device is enabled to perform any method according to any one of the second aspect or the possible implementations of the second aspect.

According to a seventh aspect, an embodiment of this application further provides a communication system, including the foregoing terminal device and the foregoing network device.

According to an eighth aspect, an embodiment of this application provides a chip system. The chip system includes a processor, and optionally further includes a memory. The memory is configured to store a computer program. The processor is configured to invoke the computer program from the memory and run the computer program, to enable a communication device on which the chip system is installed to perform any method according to any one of the first aspect or the possible implementations of the first aspect; and/or to enable the communication device on which the chip system is installed to perform any method according to any one of the second aspect or the possible implementations of the second aspect.

According to a ninth aspect, an embodiment of this application provides a computer program product. The computer program product includes computer program code. When the computer program code is run by a communication unit and a processing unit or a transceiver and a processor of a communication device, the communication device is enabled to perform any method according to any one of the first aspect or the possible implementations of the first aspect; and/or a communication device on which a chip system is installed is enabled to perform any method according to any one of the second aspect or the possible implementations of the second aspect.

According to a tenth aspect, an embodiment of this application provides a computer-readable storage medium. The computer-readable storage medium stores a program. The program enables a communication device (for example, a terminal device) to perform any method according to any one of the first aspect or the possible implementations of the first aspect; and/or enables a communication device (for example, a network device) on which a chip system is installed to perform any method according to any one of the second aspect or the possible implementations of the second aspect.

**BRIEF DESCRIPTION OF DRAWINGS**

FIG. 1 is a schematic diagram of a communication transmission scenario according to this application;
FIG. 2 is a schematic diagram of an existing scenario in which power consumption of a terminal device is reduced according to this application;
FIG. 3 is a schematic flowchart of a communication transmission method according to this application;
FIG. 4 is a schematic diagram of differentiation between detection performance of different antenna quantities according to this application;
FIG. 5 is a first schematic flowchart in which a network device sends indication information to a terminal device to save energy according to this application;
FIG. 6 is a second schematic flowchart in which a network device sends indication information to a terminal device to save energy according to this application;
FIG. 7 is a schematic flowchart in which a terminal device sends indication information to a network device to save energy according to this application;
FIG. 8 is a schematic diagram of a first terminal device according to this application;
FIG. 9 is a schematic diagram of a second terminal device according to this application;
FIG. 10 is a schematic diagram of a first network device according to this application; and
FIG. 11 is a schematic diagram of a second network device according to this application.

**DESCRIPTION OF EMBODIMENTS**

The following describes in detail a specific implementation process of the embodiments of this application with reference to the accompanying drawings.

First, scenarios to which the embodiments of this application may be applied are described. Technical solutions in the embodiments of this application may be applied to various communication systems, for example, a long term evolution (long term evolution, LTE) system, a worldwide interoperability for microwave access (worldwide interoperability for microwave access, WiMAX) communication system, a future 5th generation (5th Generation, 5G) system such as a new radio access technology (new radio access technology, NR), and a future communication system such as a 6G system.

The 5G system (which may also be referred to as a new radio system) is used as an example. Specifically, new communication scenarios are defined in the 5G system: ultra-reliable and low-latency communication (ultra-reliable and low-latency communication, URLLC), enhanced mobile broadband (enhanced mobile broadband, eMBB), and mass machine-type communications (massive machine type communication, mMTC). These communication scenarios have stricter requirements on communication quality and power consumption reduction. Therefore, in a scheduling process, how to more effectively reduce power consumption of a terminal device without affecting PDCCH performance is particularly important.

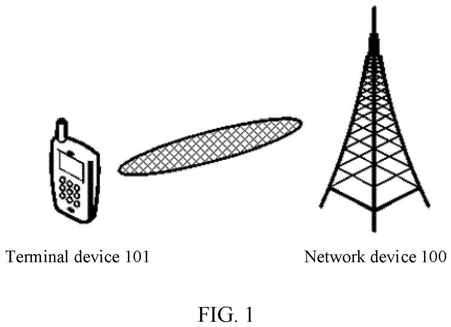

For ease of understanding the embodiments of this application, a communication system shown in FIG. 1 is first used as an example to describe in detail a communication system to which the embodiments of this application are applicable. As shown in FIG. 1, the communication system includes a network device 100 and a terminal device 101.

The network device 100 is a device that provides a wireless communication function for the terminal device 101 in the communication system, and may connect the terminal device 101 to a wireless network. The network device 100 may also be referred to as a base station (base station, BS). Currently, some examples of the network device 100 are: a gNodeB (g nodeB, gNB) in 5G, an evolved NodeB (evolved node B, eNB), a radio network controller (radio network controller, RNC), a NodeB (node B, NB), a base station controller (base station controller, BSC), a base transceiver station (base transceiver station, BTS), a home base station (for example, a home evolved nodeB or a home node B, HNB), a baseband unit (baseBand unit, BBU), a transmission reception point (transmitting and receiving point, TRP), a transmitting point (transmitting point, TP), a mobile switching center, and the like.

The terminal device 101 is a device that provides voice and/or data connectivity for a user, and may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal in the embodiments of this application may be a mobile phone (mobile phone), a tablet (Pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

A network architecture and a service scenario that are described in the embodiments of this application are intended to describe the technical solutions in the embodiments of this application more clearly, and do not constitute a limitation on the technical solutions provided in the embodiments of this application. A person of ordinary skill in the art may know that with evolution of the network architecture and emergence of a new service scenario, the technical solutions provided in the embodiments of this application are also applicable to similar technical problems. It should be understood that FIG. 1 is merely a simplified schematic diagram used as an example for ease of understanding. The communication system may further include another network device or another terminal device that is not shown in FIG. 1.

Some terms in the embodiments of this application are explained and described below for ease of understanding.

(1) CSI in the embodiments of this application refers to a channel attribute of a communication link in the wireless communication field. Generally, a receive end evaluates the CSI and feeds back the CSI to a transmit end. Content of the CSI may include a CQI, a precoding matrix indicator (precoding matrix indicator, PMI), a CSI-RS resource indicator (CSI-RS resource indicator, CRI), an SS/PBCH block resource indicator (SS/PBCH Block Resource indicator, SSBRI), a layer indicator (layer indicator, LI), a rank indicator (rank indicator, RI), and an L1-RSRP.

In a communication process, a network device may select a communication parameter based on the CSI, so that channel/signal transmission adapts to a current channel condition. Especially for a multiple-antenna system, the CSI ensures high-reliability and high-rate communication.

(2) A signal-to-noise ratio (signal-to-noise ratio, SNR) in the embodiments of this application, namely, a ratio of a power of a wanted signal to a power of a noise signal, is often expressed in decibels dB. The signal-to-noise ratio is an important parameter for measuring influence of noise on a signal. In a communication system, a value of the SNR reflects current channel quality, and a larger signal-to-noise ratio indicates better wireless communication channel quality. In addition, during practical application, the signal-to-noise ratio may be often improved by improving a transmission means and enhancing a device capability.

(3) The CQI in the embodiments of this application is a channel quality indicator, represents the current channel quality, corresponds to the value of the signal-to-noise ratio, and is a result of quantizing the signal-to-noise ratio. When a value of the CQI is 0, channel quality is the worst. A larger value of the CQI indicates better channel quality.

(4) A PDCCH in the embodiments of this application is used to carry scheduling and other control information, and is used for at least one or more of the following functions:

(1) carrying downlink scheduling information, where the downlink scheduling information is also referred to as downlink assignment (downlink assignment) information, and the downlink scheduling information includes a transmission parameter of a PDSCH, so that a terminal device receives the PDSCH, where the PDSCH is used to carry downlink data sent by the network device to the terminal device; and

(2) carry uplink scheduling information, where the uplink scheduling information is also referred to as uplink grant (uplink grant) information, and the uplink scheduling information includes a transmission parameter of a PUSCH, so that the terminal device sends the PUSCH to the network device, where the PUSCH is used to carry uplink data sent by the terminal device to the network device.

The information carried by the PDCCH may be referred to as downlink control information (downlink control information, DCI).

One PDCCH is sent in a form of a control channel element (control channel element, CCE). In other words, a time-frequency resource of the PDCCH includes one or more CCEs. One CCE includes a plurality of resource element groups (resource element group, REG). For example, the CCE includes six REGs, where one REG is equal to one resource block (resource block, RB) on an orthogonal frequency division multiplexing (orthogonal frequency division multiplexing, OFDM) symbol, the REG includes 12 resource elements (resource element, RE), and the 12 REs in the REG are numbered from 0 to 11.

**Table 1 Aggregation levels supported by a PDCCH**

| Aggregation level (aggregation level) | Quantity of CCEs (number of CCEs) |
| --- | --- |
| 1 | 1 |
| 2 | 2 |
| 4 | 4 |
| 8 | 8 |
| 16 | 16 |

As shown in Table 1, the PDCCH may support different ALs. For example, aggregation levels supported by the PDCCH may include {1, 2, 4, 8, 16} and the like. The aggregation level indicates a quantity of CCEs occupied by one candidate PDCCH.

For example, as shown in Table 1, if the aggregation level supported by the PDCCH is 4, it indicates that the candidate PDCCH occupies four CCEs. During actual application, the network device determines, based on a factor such as channel quality, an aggregation level currently used by the PDCCH. For example, if the PDCCH is to be sent to a terminal device with quite good downlink channel quality (for example, a terminal device located in a cell center), the network device may send the PDCCH by using an aggregation level 1; or if the PDCCH is to be sent to a terminal device with quite poor downlink channel quality (for example, a terminal device located at a cell edge), the network device may send the PDCCH by using an aggregation level 8 or even 16, to achieve sufficient robustness.

(5) The PDSCH in the embodiments of this application is one of physical downlink channels, and is a downlink channel carrying user data. Transmission of the PDSCH is usually scheduled by the PDCCH.

(6) A block error rate (block error rate, BLER) in the embodiments of this application is a metric type, represents a ratio of a quantity of errored blocks to a total quantity of received blocks, and is mainly used to measure system performance.

(7) A minimum scheduling slot offset (minimum K0) in the embodiments of this application indicates a minimum slot offset between the PDCCH and the scheduled PDSCH. A time unit of a time domain parameter mentioned in the embodiments of this application may be extended to a symbol, a slot, a frame, a subframe, a millisecond, a second, and the like, and is not limited to the "slot".

Based on the descriptions of the foregoing application scenarios in the embodiments of this application, the following specifically describes a process of reducing the power consumption of the terminal device. Currently, in a process in which the terminal device communicates with the network device, a larger quantity of working antennas of the terminal device indicates higher power consumption of the terminal device. Therefore, a manner of reducing the power consumption of the terminal device is turning off some antennas when data transmission does not need to be performed with the network device, to reduce the power consumption of the terminal device, that is, reducing a quantity of receive antennas for receiving the PDCCH. In a scheduling process, a downlink is used as an example. The network device schedules the PDSCH for the terminal device by using the PDCCH, and a transmission rate of the PDSCH is related to a quantity of layers for transmitting the PDSCH. If the quantity of layers decreases, the transmission rate decreases.

Further, the quantity of layers for transmitting the PDSCH is further related to a quantity of antennas, that is, a quantity of receive antennas used by the terminal device to receive the PDSCH needs to be greater than or equal to the quantity of layers for transmitting the PDSCH. For example, if a maximum quantity, configured by the network device for the terminal device, of layers for transmitting the PDSCH is 4, the network device defaults that the terminal device has at least four receive antennas. Therefore, when the terminal device and the network device need to perform data transmission, to ensure the transmission rate of the PDSCH scheduled by the network device for the terminal device by using the PDCCH, the terminal device may turn on the foregoing receive antennas that are turned off, to receive the PDSCH.

In addition, in the process in which the terminal device communicates with the network device, from a perspective of a time domain, if a slot offset between the PDCCH and the scheduled PDSCH is greater than 0, that is, the scheduled PDSCH and the PDCCH are not in a same slot, the terminal device may reduce unnecessary data buffering and relax processing time of the PDCCH, to reduce the power consumption of the terminal device.

However, when the power consumption of the terminal device is reduced from a perspective of a space domain, switching time Y is required when the terminal device turns on or off a receive antenna. Therefore, in a conventional technology, when the power consumption of the terminal device is reduced by using the space domain, a cross-slot scheduling manner in time domain may be further combined, so that the slot offset between the PDCCH and the scheduled PDSCH may satisfy the antenna switching time. That is, as long as a value of minimum K0 used to represent the minimum scheduling slot offset is appropriate, minimum K0 may satisfy the antenna switching time Y.

For example, it is assumed that a receive antenna quantity supported by or configured by the terminal device is 4, which is denoted as 4Rx. The terminal device detects the PDCCH by using only 2Rx to save energy. When the terminal device switches from 2Rx to 4Rx, required switching time is Y. In this case, the network device needs to set minimum K0 to Minimum $K0 \geq Y$

Therefore, when the network device does not need to schedule data, the terminal device may detect the PDCCH by using only 2Rx to reduce the power consumption of the terminal device. When the network device needs to schedule data, because Minimum $K0 \geq Y$, the terminal device has sufficient time to switch from 2Rx to 4Rx to receive the PDSCH.

It should be noted that in a process of transmitting and receiving the PDCCH between the terminal device and the network device, the terminal device blindly detects the PDCCH periodically, but the network device does not necessarily send the PDCCH. Therefore, when detecting the PDCCH from the network device, the terminal device often does not obtain the PDCCH through detection, that is, a base station does not send the PDCCH. Therefore, a person skilled in the art may understand that, when the terminal device detects the PDCCH from the network device, a case in which the terminal device receives the PDCCH sent by the network device is included, and a case in which the terminal device does not obtain the PDCCH through detection is further included.

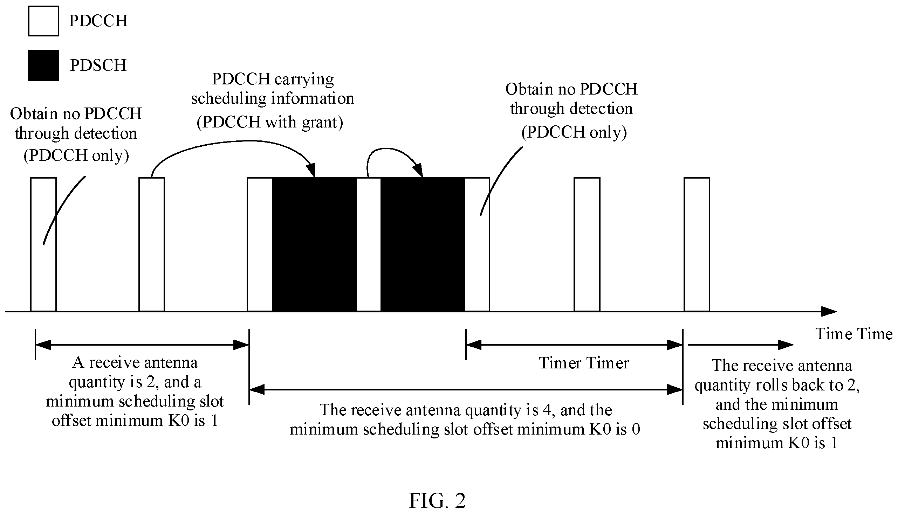

FIG. 2 shows a general existing process of combining the space domain and the time domain to reduce the power consumption of the terminal device. The process includes: The base station indicates the minimum scheduling slot offset minimum K0 to the terminal device. It is assumed that the terminal device receives and detects the PDCCH by using 2Rx when Minimum K0=1. When the base station needs to schedule data, the base station sends scheduling downlink control information (downlink control information, DCI) to the terminal device by using the PDCCH.

After obtaining the scheduling DCI through detection, the terminal device turns on 4Rx. Because Minimum K0>0 in this case, the terminal device may have sufficient switching time to turn on 4Rx. After turning on 4Rx, the terminal device receives the PDCCH and the PDSCH by using 4Rx, and the terminal device may further start a timer (timer) to switch from 4Rx to 2Rx. "PDCCH only" shown in FIG. 2 indicates that the base station does not send the PDCCH, and the timer is used for retiming each time the terminal device receives scheduling. When the timer expires, the terminal device turns off some receive antennas and rolls back to 2Rx to reduce the power consumption.

However, a main problem of the foregoing power consumption reduction method is that in a communication process, the base station does not learn of a change in a quantity of antennas used by the terminal device to receive the PDCCH. Therefore, when the terminal device switches the receive antenna quantity to reduce the power consumption, for example, the terminal device uses 2Rx after switching, but the base station may consider that the terminal device uses 4Rx, PDCCH parameter selection when the base station sends the PDCCH is inappropriate, for example, AL (aggregation level) selection is inappropriate. Consequently, performance of detecting the PDCCH by the terminal device deteriorates, and so on.

To resolve this problem, the embodiments of this application provide a communication transmission method. The following describes in detail by using the accompanying drawings and by listing the embodiments.

In addition, the terms "system" and "network" in the embodiments of this application may be used interchangeably. "At least one" means one or more, and "a plurality of" means two or more. The term "and/or" describes an association relationship between associated objects and represents that three relationships may exist. For example, A and/or B may represent the following three cases: Only A exists, both A and B exist, and only B exists. A and B may be in a singular or plural form. The character "/" usually indicates an "or" relationship between the associated objects. "At least one of the following" or a similar expression thereof indicates any combination of these items, including a single item or any combination of a plurality of items. For example, at least one of a, b, or c may indicate: a, b, c, a and b, a and c, b and c, or a, b, and c, where a, b, and c may be singular or plural.

Unless otherwise stated, ordinal numbers such as "first" and "second" mentioned in the embodiments of this application are intended to distinguish a plurality of objects, rather than limit an order, a time sequence, priorities, or importance degrees of the plurality of objects. Moreover, terms "include" and "have" in the embodiments of this application, the claims, and the accompanying drawings are inclusive. For example, a process, method, system, product, or device including a series of steps or modules is not limited to the listed steps or modules, and may further include a step or module that is not listed.

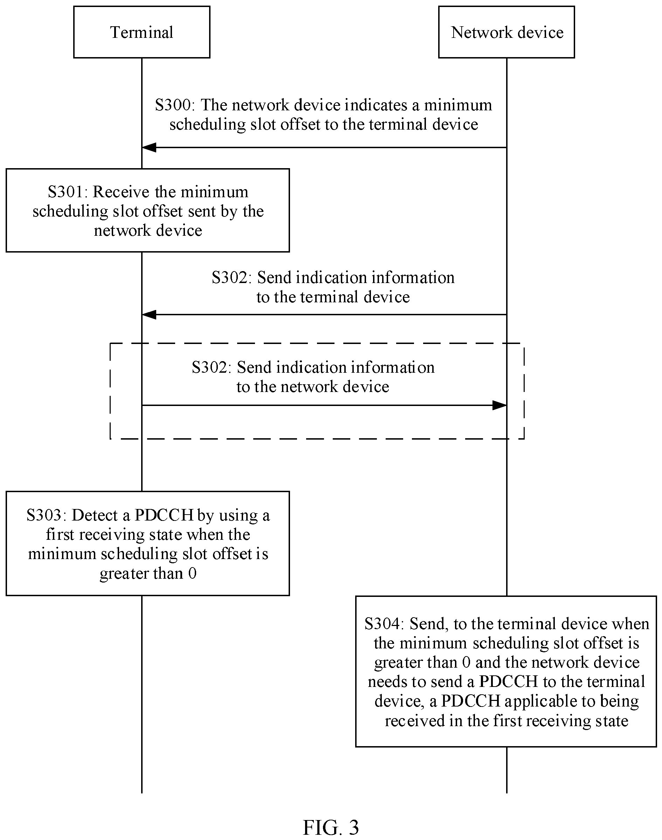

As shown in FIG. 3, a specific procedure of the communication transmission method provided in the embodiments of this application includes the following steps.

Step 300: The network device indicates a minimum scheduling slot offset minimum K0 to the terminal device.

Further, in addition to indicating minimum K0 to the terminal device, the network device further configures a time domain resource assignment list of a PDSCH for the terminal device by using radio resource control (Radio Resource Control, RRC) signaling.

The time domain resource assignment list includes a set of slot offsets K0 between a PDCCH and the scheduled PDSCH, a set of start symbols of the PDSCH in a slot, and a set of lengths of the PDSCH in the slot. A value of K0 in the K0 set may be greater than or equal to 0, and a plurality of values may be configured for K0. For example, the slot offsets K0 may be configured as {0, 1, 2, 3, 4, 5, 6}.

Minimum K0 indicated by the network device to the terminal device may be one value in the K0 set, or may be another value. Minimum K0 reflects a minimum available value of K0 in the K0 set. For example, if Minimum K0=1, available values of K0 in the K0 set are 1, 2, 3, 4, 5, and 6.

A manner in which the network device indicates minimum K0 to the terminal device is not limited in this application. For example, the network device may directly or indirectly indicate minimum K0 to the terminal device by using RRC signaling, MAC CE signaling, or DCI signaling. Alternatively, the terminal device may obtain minimum K0 directly or indirectly.

Step 301: The terminal device receives minimum K0 sent by the network device.

Further, the terminal device may further receive the time domain resource assignment list configured by the network device.

Step 302: The network device sends second indication information to the terminal device.

Optionally, the second indication information is used to determine a first receiving state used by the terminal device to detect the PDCCH. Alternatively, the second indication information is used to determine a first antenna quantity used by the terminal device to detect the PDCCH, where the first antenna quantity is less than a maximum receive antenna quantity configured or supported by the terminal device.

In an implementation, the first receiving state is a receiving manner that can reduce power consumption of the terminal device. When the terminal device receives the PDCCH by using different receiving states, the power consumption of the terminal device is different.

Further, when the terminal device does not save energy in the embodiments of this application, a receiving state of the terminal device may be represented as a second receiving state.

In another implementation, the receiving state in the embodiments of this application may be specifically represented as that the terminal device detects the PDCCH by using a specific quantity of antennas, and that the terminal device uses different receive antenna quantities corresponds to different receiving states of the terminal device. For example, the first receiving state is that the terminal device detects the PDCCH by using the first antenna quantity, where the first antenna quantity is less than the maximum receive antenna quantity configured or supported by the terminal device. The second receiving state is that the terminal device detects the PDCCH by using a second antenna quantity, where the second antenna quantity is not greater than the maximum receive antenna quantity configured or supported by the terminal device, and the second antenna quantity is equal to a quantity of receive antennas used by the terminal device to receive the PDSCH.

The first receiving state in step 302 in the embodiments of this application mainly represents a receiving state obtained after the terminal device turns off some antennas to reduce the power consumption of the terminal device. The first receiving state may also be understood as that the terminal device detects the PDCCH by using the first antenna quantity, where the first antenna quantity is less than the second antenna quantity.

For example, if a current second receiving state is a state in which the terminal device detects the PDCCH by using 4Rx, the first receiving state may be represented as a receiving state obtained after the terminal device switches current 4Rx to 2Rx. For another example, if a current second receiving state is a state in which the terminal device detects the PDCCH by using 8Rx, the first receiving state may be represented as a receiving state obtained after the terminal device switches current 8Rx to 4Rx or 2Rx.

It should be noted that the foregoing descriptions of the term "receiving state" are merely intended to more clearly describe the embodiments of this application, and constitute no limitation. In addition, the term "receiving state" is a well-known term in the art, and a person skilled in the art should know a meaning thereof.

Certainly, in step 302, the terminal device may alternatively send indication information to the network device.

Step 303: When minimum K0 is greater than 0, the terminal device detects the PDCCH by using the first receiving state.

In the embodiments, detecting the PDCCH means that the terminal device performs an action of detecting the PDCCH, and a result of whether the PDCCH is obtained through detection is not limited. Detecting the PDCCH may also be equivalent to receiving the PDCCH, includes a case in which the terminal device receives the PDCCH sent by the network device, and further includes a case in which the terminal device does not obtain the PDCCH through detection.

Step 304: When minimum K0 is greater than 0 and the network device needs to send a PDCCH to the terminal device, the network device sends, to the terminal device, a PDCCH applicable to being received in the first receiving state.

It should be noted that a sequence of step 303 and step 304 may not be distinguished in an actual execution process.

According to the method, in the embodiments of this application, when the power consumption of the terminal device is reduced by switching the current receiving state of receiving the PDCCH to the first receiving state, if the terminal device receives indication information sent by the network device, the terminal device determines that the PDCCH may be detected by using the first receiving state; or the terminal device sends indication information to the network device if the terminal device determines that the current receiving state of receiving the PDCCH needs to be switched to the first receiving state. That is, the network device and the terminal device notify each other by sending the indication information to each other during communication, so that the network device learns that the terminal device detects the PDCCH by using the first receiving state, to ensure that the terminal device can normally receive, when reducing the power consumption of the terminal device by switching the current receiving state to the first receiving state, the PDCCH sent by the network device.

Based on the descriptions of the foregoing application scenarios in the embodiments of this application, the following specifically describes a process of reducing the power consumption of the terminal device. In the embodiments of this application, different receiving states may reflect different detection performance presented when the terminal device detects the PDCCH, for example, different signal-to-noise ratio thresholds that satisfy a same BLER requirement. The second receiving state described in the embodiments of this application may represent a receiving state of receiving the PDCCH when Minimum K0=0. A signal-to-noise ratio threshold in the first receiving state is higher than a signal-to-noise ratio threshold in the second receiving state with a same time-frequency resource, a same channel condition, and a same BLER requirement. That is, detection performance of detecting the PDCCH in the second receiving state is higher than that in the first receiving state.

Further, to ensure that the terminal device can still normally receive, in the first receiving state, the PDCCH sent by the network device, the network device may adjust, in a plurality of manners, the PDCCH that needs to be sent to the terminal device. Specific manners are not limited to the following manners.

1. Adjustment manner 1:

The network device adjusts, through compensation, a parameter of the PDCCH that needs to be sent to the terminal device.

The parameter may include but is not limited to some or all of an AL, an SNR, a CQI, CSI, and a BLER.

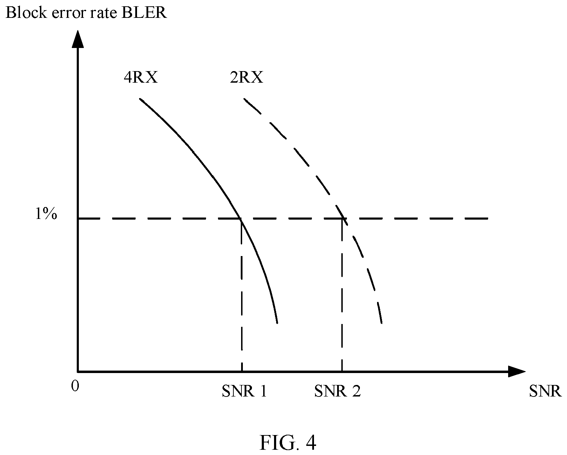

As shown in FIG. 4, assuming that the second receiving state is a state in which the terminal device detects the PDCCH by using 4Rx, and the first receiving state is a state in which the terminal device detects the PDCCH by using 2Rx, it can be learned, with the same time-frequency resource, the same channel condition, and a specified BLER, for example, when the BLER is 1%, that the terminal device can be ensured, only when a detected SNR is greater than or equal to an SNR 2, to receive the PDCCH by using 2Rx, and the terminal device can be ensured, only when the detected SNR is greater than or equal to an SNR 1, to receive the PDCCH by using 4Rx.

It should be noted that two curves shown in FIG. 4 are not limited to representing SNRs obtained through detection by using different receive antenna quantities.

In other words, for the same time-frequency resource, an SNR threshold of 2Rx, namely, the SNR 2, needs to be higher than an SNR threshold of 4Rx, namely, the SNR 1, to ensure same detection performance of 2Rx and 4Rx.

Therefore, in the embodiments of this application, the network device may compensate for 2Rx, to ensure that the terminal device can still normally receive, in the first receiving state, the PDCCH sent by the network device. Generally, a larger resource used to send the PDCCH indicates better detection performance of the PDCCH.

The parameter AL reflects a size of a resource for sending the PDCCH. Therefore, the network device may compensate for the AL, that is, use more resources to send the PDCCH. For example, the larger the AL, the more a curve of 2Rx shown in FIG. 4 shifts to the left. After the AL reaches a specific value, 2Rx in FIG. 4 may be close to 4Rx in FIG. 4, so that an SNR corresponding to current channel quality is equal to the SNR 1, and the terminal device can also receive the PDCCH by using 2Rx.

Further, a compensation factor used to assist the network device in determining the parameter of the PDCCH is further introduced in the embodiments of this application. The compensation factor in the embodiments of this application is mainly used to compensate for one or more of factors such as the AL, the SNR, the CQI, the CSI, and the BLER.

Optionally, the network device may directly compensate for the AL. When AL=1, it indicates that the PDCCH occupies one CCE. When AL=2, it indicates that the PDCCH occupies two CCEs. Usually, better channel quality indicates less interference, and the network device may select a smaller AL to send the PDCCH. Conversely, poorer channel quality indicates greater interference, and the network device needs to select a larger AL to send the PDCCH.

For example, the network device needs to determine an AL of a PDCCH of 2Rx based on channel quality of 4Rx. Assuming that a PDCCH of 4Rx requires AL=m, the network device needs to adjust, when sending the PDCCH, the AL to AL'=f(m, delta), where f() represents a functional relationship, m represents the AL required by the PDCCH of 4Rx, and delta represents a compensation factor for the AL, for example, Compensated AL'=Delta*m. Therefore, the network device sends the PDCCH by using AL'=Delta*m.

Optionally, if a compensation factor is for the SNR, the CQI, the CSI, or the BLER, the network device adjusts the SNR, the CQI, the CSI, or the BLER, and then determines, based on an adjusted SNR, an adjusted CQI, adjusted CSI, or an adjusted BLER, an AL of the PDCCH to be sent.

A level of channel quality may be represented by using the SNR, the CSI, and the CQI. For example, a higher CQI or SNR indicates better channel quality. The BLER is an indicator of detection performance of the PDCCH. A higher BLER indicates better reliability. For example, in an eMBB scenario, the BLER of the PDCCH is usually required to be 1%. The following uses the SNR as an example to specifically describe compensation for the SNR. Before sending the PDCCH, the network device selects, based on the SNR, the AL used to send the PDCCH.

Generally, the channel quality measured by using 4Rx is better than channel quality measured by using 2Rx, and an SNR of 4Rx is greater than an SNR of 2Rx. When the network device determines, by using the SNR measured by using 4Rx, the AL used to send the PDCCH, the AL selected by the network device is 4 assuming that the measured SNR is 2 dB. In this case, if the terminal device uses 2Rx, the terminal device may not receive the PDCCH sent by the network device when the network device uses the AL of 4. A reason is that the SNR measured by the terminal device by using 2Rx does not reach 2 dB.

Therefore, in the embodiments of this application, to ensure that the terminal device can also receive, by using 2Rx, the PDCCH sent by the network device, the network device may compensate, based on the compensation factor, for the PDCCH that needs to be sent. That is, the network device determines, by using the compensated SNR, the AL used to send the PDCCH. The compensated SNR may be expressed as SNR'=g(SNR, C), where g() represents a relationship between the uncompensated SNR and the compensated SNR, and C represents a compensation factor for the SNR.

Optionally, it is assumed that a formula for compensating the measured SNR by using the compensation factor is the following formula 1:

$$SNR\_A= (SNR\_B–C) \text{ dB formula 1}$$

In the formula, SNR_A represents an SNR corresponding to the first receiving state, SNR_B represents an SNR corresponding to the second receiving state, and C represents the compensation factor.

Assuming that the compensation factor is 3 dB, and the SNR corresponding to 4Rx is 2 dB, the SNR corresponding to 2Rx and obtained through calculation by using the foregoing formula 1 may be -1 dB. Then, the network device determines the AL based on the SNR corresponding to 2Rx. It is assumed that the corresponding AL is 8 when the SNR is -1 dB. Therefore, in this case, the network device selects the AL of 8 to send the PDCCH, to ensure that the terminal device can receive, by using 2Rx, the PDCCH sent by the network device.

Optionally, an SNR threshold of the specified BLER may be compensated for by using the compensation factor, and a compensation formula may be expressed as a formula 2:

$$SNR\_A= (SNR\_B+C) \text{ dB formula 2}$$

In the formula, SNR A represents an SNR threshold corresponding to the first receiving state, SNR_B represents an SNR threshold corresponding to the second receiving state, and C represents the compensation factor.

Assuming that the compensation factor is 3 dB, and an SNR threshold corresponding to a 4Rx AL of 4 is 2 dB, an SNR threshold corresponding to a 2Rx AL of 4 and obtained through calculation by using the foregoing formula 2 may be 5 dB. Then, the network device determines the AL based on a currently received SNR. It is assumed that the currently received SNR is 2 dB, and is less than the SNR threshold corresponding to the 2Rx AL of 4. Therefore, in this case, the network device selects the AL of 8 to send the PDCCH, to ensure that the terminal device can receive, by using 2Rx, the PDCCH sent by the network device.

Further, in the embodiments of this application, the network device may determine, in a plurality of manners, the compensation factor used to compensate for the to-be-sent PDCCH during cross-slot scheduling. The following separately describes the manners.

Determining manner 1: Determine, based on a preset value in a protocol, the compensation factor used to perform a compensation operation.

The network device and the terminal device specify a value of the compensation factor in a communication protocol. When the network device needs to compensate for the PDCCH to be sent to the terminal device, the network device determines the compensation factor according to the protocol, and then compensates, based on the compensation factor, for the PDCCH that needs to be sent.

Further, the terminal device may further determine the first receiving state based on the compensation factor specified in the communication protocol with the network device. For example, assuming that the terminal device normally detects the PDCCH by using 8Rx, when the terminal device needs to save energy by turning off the some antennas, the terminal device may determine, based on the compensation factor in the communication protocol, a quantity of the antennas to be turned off.

Further, assuming that the terminal device considers that the compensation factor can only ensure normal reception of the terminal device by using 4Rx, but cannot ensure reception of the terminal device by using 2Rx, to ensure that the terminal device normally receives the PDCCH sent by the network device, the terminal device may determine to turn off 4Rx, that is, determine that the first receiving state is a state in which the PDCCH is detected by using 4Rx.

Optionally, a plurality of compensation factors may be preset in the protocol. If the plurality of compensation factors are preset in the protocol, the network device selects one compensation factor from the plurality of compensation factors preset in the protocol, and determines, based on the selected compensation factor, the parameter used for the PDCCH to be sent by the network device to the terminal device.

Determining manner 2: The network device uses, as the compensation factor for performing a compensation operation, a compensation factor determined by the network device.

For example, if the compensation factor determined by the network device is a compensation factor 1, when the network device needs to send the PDCCH, the network device may determine, based on the compensation factor 1, the parameter used for the PDCCH to be sent to the terminal device.

Optionally, the network device may define a plurality of compensation factors. When the network device needs to send the PDCCH, the network device may select one compensation factor from the plurality of defined compensation factors, and determine, based on the selected compensation factor, the parameter used for the PDCCH to be sent to the terminal device.

For example, the network device defines a plurality of compensation factors, including compensation factors 1 to 9. When the PDCCH needs to be sent, the network device selects one compensation factor from the compensation factors 1 to 9. Assuming that the selected compensation factor is a compensation factor 2, the network device determines, based on the compensation factor 2, the parameter used for the PDCCH to be sent to the terminal device.

Determining manner 3: The network device determines a compensation factor reported by the terminal device as the compensation factor used to compensate for the PDCCH to be sent to the terminal device.

For example, if the network device receives a compensation factor 1 reported by a terminal device 1, the network device determines the compensation factor 1 as the compensation factor used to compensate for a PDCCH to be sent to the terminal device 1; or if the network device receives a compensation factor 2 reported by a terminal device 2, the network device determines the compensation factor 2 as the compensation factor used to compensate for a PDCCH to be sent to the terminal device 2.

Optionally, the terminal device may report a plurality of compensation factors. If the network device receives the plurality of compensation factors reported by the terminal device, the network device selects one compensation factor from the plurality of compensation factors reported by the terminal device, and determines, based on the selected compensation factor, the parameter used for the PDCCH to be sent by the network device to the terminal device.

Further, in the embodiments of this application, when the compensation factor of the parameter of the PDCCH is determined, the compensation factor may be set based on an actual requirement. A specific selection manner may be but is not limited to the following selection manner.

Optionally, in the embodiments of this application, the network device may define a same compensation factor or different compensation factors for different terminal devices. A value of the compensation factor may be related to a location or cell coverage of the terminal device. For example, a smaller compensation factor is configured for a terminal device at a cell center or with good coverage, and a larger compensation factor is configured for a terminal device at a cell edge or with poor coverage.

2. Adjustment manner 2:

The network device determines a parameter of the PDCCH based on CSI and/or CQIs that respectively correspond to N receiving states reported by the terminal device, and sends the PDCCH.

The terminal device periodically receives a CSI-RS, to measure downlink channel quality, and feeds back the CSI and/or the CQIs to the network device. Assuming that the maximum antenna quantity of the terminal device is 4Rx, the terminal device may receive the CSI-RS by using 2Rx, or may receive the CSI-RS by using 4Rx. The network device may determine the parameter of the PDCCH and scheduling information of the PDSCH by using the CSI and/or the CQIs fed back by the terminal device.

In a conventional technology, to avoid affecting scheduling of the PDSCH by the network device, the terminal device receives the CSI-RS by using, by default, an antenna quantity that can support a maximum layer quantity configured by the network device for the terminal device. For example, the maximum layer quantity configured by the network device for the terminal device is 4, the terminal device at least requires four antennas, and the terminal device receives and measures the CSI-RS by using 4Rx, and feeds back the measured CSI and/or CQIs to the network device.

In the embodiments of this application, the network device may send an instruction to the terminal device, to instruct the terminal device to report at least two types of CSI and/or CQIs.

For example, it is assumed that the second receiving state of the terminal device is 4Rx, and a quantity of receive antennas used by the terminal device to receive the PDSCH is also 4Rx. The terminal device receives the CSI-RS by using the receive antenna quantity in the second receiving state, and the terminal device needs to feed back the at least two types of CSI to the network device after the terminal device receives the instruction sent by the network device.

The CSI may specifically include at least two of the following: corresponding CSI when a receiving state of the terminal device is 4Rx, corresponding CSI when a receiving state of the terminal device is 2Rx, and corresponding CSI when a receiving state of the terminal device is 1Rx.

In the at least two types of CSI or CQIs fed back by the terminal device to the network device, it needs to be ensured that CSI or a CQI that corresponds to the receive antenna quantity in the second receiving state is included, to ensure that the network device can accurately schedule the PDSCH for the terminal device.

It is assumed that the network device receives the CSI that corresponds to 4Rx and that is reported by the terminal device and the CSI corresponding to 2RX of the terminal device. In this case, when the network device needs to send the PDCCH to the terminal device, the network device may determine, based on the received CSI corresponding to 2Rx, an AL for sending the PDCCH, and send the PDCCH to the terminal device.

Further, in the embodiments of this application, to ensure that when the terminal device detects, by using the first receiving state, the PDCCH sent by the network device, the network device can adjust, in time, the PDCCH sent to the terminal device. Therefore, the terminal device switches the current receiving state to the first receiving state only after determining that a case in which the second receiving state is adjusted to the first receiving state is satisfied. That is, when determining that a condition for turning off the some antennas is satisfied, the terminal device switches the current second antenna quantity to the first antenna quantity.

In the embodiments of this application, there are a plurality of cases in which the terminal device adjusts the current second receiving state to the first receiving state, and specific cases are not limited to the following cases.

Case 1: The terminal device receives indication information that is sent by the network device and that indicates that the terminal device may adjust the second receiving state to the first receiving state.

The indication information sent by the network device to the terminal device may be sent by using RRC signaling, MAC CE signaling, or DCI signaling.

Further, the indication information sent by the network device to the terminal device may include a plurality of cases, which are separately described below.

Network side indication information 1: information used by the network device to compensate for the to-be-sent PDCCH.

The network side indication information 1 indicates that when sending the PDCCH to the terminal device, the network device compensates for the PDCCH that needs to be sent.

Therefore, after receiving the network side indication information 1 sent by the network device, the terminal device may learn that the network device compensates for the to-be-sent PDCCH when the network device needs to send the PDCCH to the terminal device.

In other words, in this case, it can be ensured that receiving performance of the PDCCH is not affected after the terminal device adjusts the second receiving state to the first receiving state, and the terminal device can correctly receive, by using the first receiving state, the PDCCH sent by the network device. Therefore, after receiving the network side indication information 1 sent by the network device, the terminal device may adjust the current second receiving state of the terminal device to the first receiving state to reduce the power consumption of the terminal device.

For example, it is assumed that the current receiving state of the terminal device is detecting the PDCCH from the network device by using 4Rx. The network device sends the network side indication information 1 to the terminal device by using RRC signaling. After receiving the network side indication information 1 sent by the network device, the terminal device may switch current 4Rx of the terminal device to 2Rx to reduce the power consumption of the terminal device, that is, adjust the current second receiving state to the first receiving state.

Further, in addition to notification information indicating that the network device compensates for the PDCCH when sending the PDCCH to the terminal device, the current network side indication information 1 may further include the compensation factor used by the network device to compensate for the to-be-sent PDCCH.

Optionally, the network side indication information 1 includes the compensation factor, so that after receiving the network side indication information 1, the terminal device can determine, based on the compensation factor in the network side indication information 1, whether the PDCCH compensated for by the network device by using the compensation factor is applicable to the first receiving state of the terminal device.

If the terminal device determines, based on the compensation factor, that the PDCCH compensated for by the network device by using the compensation factor is not applicable to the first receiving state of the terminal device, the terminal device does not switch the receiving state to ensure that the PDCCH sent by the network device is normally received. Alternatively, if the terminal device determines, based on the compensation factor, that the PDCCH compensated for by the network device by using the compensation factor is not applicable to the first receiving state of the terminal device, the terminal device may send notification information to the network device, to notify the network device to reselect a compensation factor to compensate for the PDCCH that needs to be sent, to ensure that the terminal device can normally receive, in the first receiving state, the PDCCH sent by the network device.

Optionally, the network side indication information 1 includes the compensation factor, so that after receiving the network side indication information 1, the terminal device can determine the first receiving state based on the compensation factor in the network side indication information 1. That is, the terminal device may determine, based on the compensation factor in the indication information, the quantity of antennas that may be turned off.

For example, the second receiving state of the terminal device is 4Rx. After receiving the network side indication information 1 sent by the network device, the terminal device determines, based on a compensation factor 1 included in the network side indication information 1, that the network device compensates for the to-be-sent PDCCH based on the compensation factor 1, to ensure that the terminal device normally receives the PDCCH when the receiving state is 2Rx. However, it cannot be ensured that the terminal device can normally receive the PDCCH when the receiving state is 1Rx.

Although a case in which the terminal device switches a quantity of working receive antennas from an antenna quantity of 4Rx to 1Rx can better reduce the power consumption of the terminal device, the compensation factor cannot ensure that the terminal device correctly receives the PDCCH by using 1Rx. Therefore, the terminal device may determine, based on the compensation factor 1, that the first receiving state is 2Rx. To be specific, after the terminal device receives the network side indication information 1 sent by the network device, to reduce the power consumption of the terminal device, a receiving state of 4Rx may be switched to a receiving state of 2Rx, to receive the PDCCH.

Further, the network side indication information 1 may alternatively include only the compensation factor, that is, only the compensation factor is sent to the terminal device. In this way, the terminal device determines, based on the network side indication information 1, that the second receiving state may be switched to the first receiving state. Subsequently, before sending the PDCCH to the terminal device, the network device compensates, based on the compensation factor, for the PDCCH that needs to be sent.

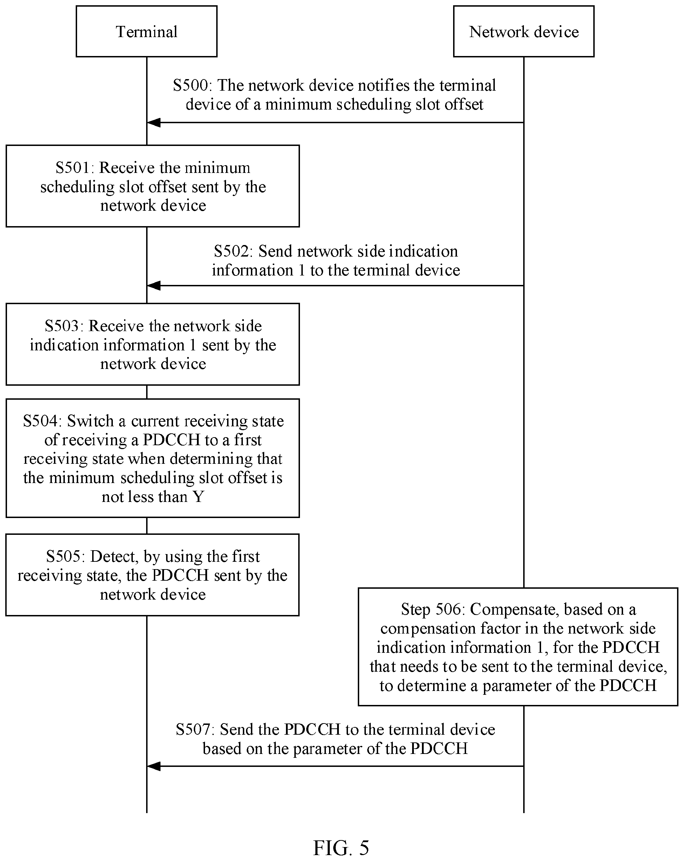

As shown in FIG. 5, in the embodiments of this application, specific steps of a procedure of reducing the power consumption of the terminal device by sending, by the network device, the network side indication information 1 to the terminal device include the following:

Step 500: The network device notifies the terminal device of minimum K0.
Step 501: The terminal device receives minimum K0 sent by the network device.
Step 502: The network device sends the network side indication information 1 to the terminal device.
Step 503: The terminal device receives the network side indication information 1 sent by the network device.
Step 504: When determining that current minimum K0 is not less than Y, the terminal device switches a receiving state of receiving the PDCCH to the first receiving state.
Y is switching time required for the terminal device to turn on and/or turn off an antenna.
Step 505: The terminal device detects, by using the first receiving state, the PDCCH sent by the network device.
Step 506: When minimum K0 is not less than Y, the network device compensates, based on the compensation factor in the network side indication information 1, for the PDCCH that needs to be sent to the terminal device, to determine the parameter of the PDCCH.
Step 507: The network device sends the PDCCH to the terminal device based on the parameter of the PDCCH.

It should be noted that a sequence of step 500 and step 502 may not be limited, and a sequence of step 505, step 506, and step 507 may be not limited either.

Network side indication information 2: The terminal device receives indication information that is sent by the network device and that indicates that the terminal device reports the at least two types of CSI and/or CQIs.

Because different quantities of receive antennas correspond to different channel quality, CSI measured by the terminal device based on signals of different receive antenna quantities is different.

For example, assuming that the terminal device receives the CSI-RS by using 4Rx, CSI corresponding to 4Rx is fed back. In this case, a CQI is larger. When the terminal device receives the CSI-RS by using 2Rx, CSI corresponding to 2Rx is fed back. In this case, a CQI is smaller.

It is stipulated in an existing protocol that the terminal device receives the CSI-RS by using the antenna quantity that can support the maximum layer quantity configured by the network device for the terminal device, and feeds back CSI and/or a CQI that correspond/corresponds to the antenna quantity. When Minimum K0>0, the network device does not learn of channel quality that corresponds when the terminal device receives the PDCCH by using the first receiving state. Therefore, when the terminal device uses the first receiving state, the network device cannot send, to the terminal device, the PDCCH applicable to being received in the first receiving state.

However, in the embodiments of this application, when the terminal device receives the network side indication information 2 sent by the network device, the terminal device needs to report the at least two types of CSI to the network device, and switches the current receiving state to the first receiving state when minimum K0 is not less than Y.

Further, it is assumed that the quantity that is of antennas for receiving the PDCCH and that corresponds to the second receiving state of the terminal device is 4Rx, and the quantity that is of antennas for receiving the PDCCH and that corresponds to the first receiving state is 2Rx. After the terminal device receives the network side indication information 2 sent by the network device, the terminal device still receives the CSI-RS by using the receive antenna quantity in the second receiving state, that is, receives the CSI-RS by using 4Rx, and obtains, through calculation by using the CSI-RS received by using the four antennas, CSI corresponding to the second receiving state. In addition, the terminal device obtains, through calculation by using a CSI-RS received by using any two of the four antennas, CSI corresponding to the first receiving state. After determining the CSI corresponding to the first receiving state and the CSI corresponding to the second receiving state, the terminal device feeds back the CSI corresponding to the second receiving state and the CSI corresponding to the first receiving state to the network device. After the network device receives feedback information reported by the terminal device, it is assumed that the network device receives CSI, namely, CSI_1, that corresponds to 4Rx and that is reported by the terminal device, and CSI, namely, CSI_2, that corresponds to 2Rx and that is reported by the terminal device. Therefore, when Minimum K0≥Y, the network device may determine, by using the received CSI_2 corresponding to 2Rx, the parameter of the PDCCH to be sent to the terminal device, and send the PDCCH; and determine the scheduling information of the PDSCH by using the CSI_1 corresponding to 4Rx.

When the network device needs to send the PDCCH to the terminal device, the network device determines the parameter of the PDCCH based on information about the received CSI or a received CQI that corresponds to 2Rx, to more effectively ensure accuracy of PDCCH parameter selection.

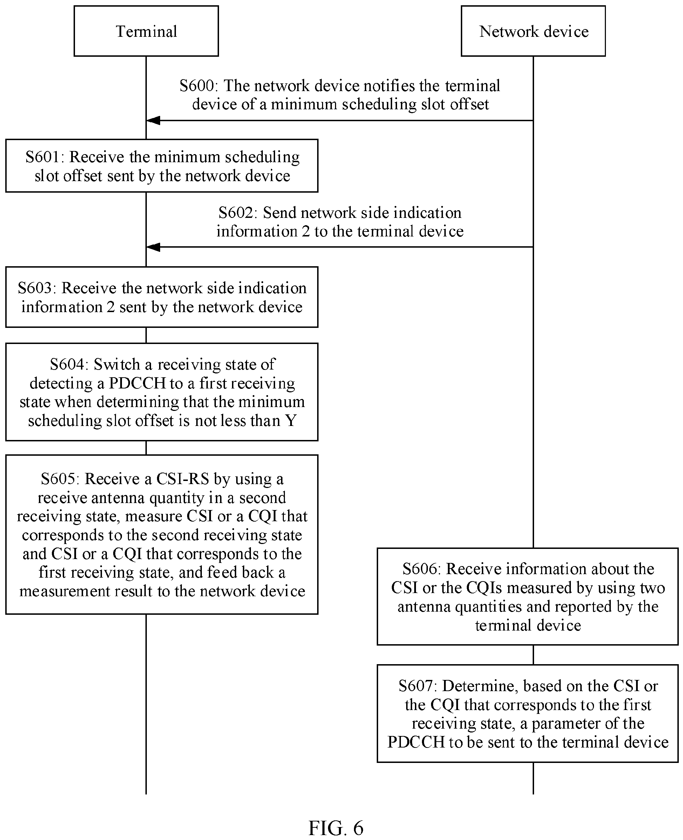

As shown in FIG. 6, in the embodiments of this application, specific steps of a procedure of reducing the power consumption of the terminal device by sending, by the network device, the network side indication information 2 to the terminal device include the following:

Step 600: The network device notifies the terminal device of minimum K0.
Step 601: The terminal device receives minimum K0 sent by the network device.
Step 602: The network device sends the network side indication information 2 to the terminal device.
Step 603: The terminal device receives the network side indication information 2 sent by the network device.
Step 604: When determining that minimum K0 is not less than Y, the terminal device switches a receiving state of detecting the PDCCH to the first receiving state.
Y is switching time required for the terminal device to turn on and/or turn off an antenna.
Step 605: The terminal device receives the CSI-RS by using the receive antenna quantity in the second receiving state, measures CSI or a CQI that corresponds to the second receiving state and CSI or a CQI that corresponds to the first receiving state, and feeds back a measurement result to the network device.
Step 606: The network device receives information about CSI or CQIs measured by using two antenna quantities and reported by the terminal device.
Step 607: When the network device needs to send the PDCCH to the terminal device, the network device determines the parameter of the PDCCH based on the CSI or the CQI that corresponds to the first receiving state, and sends the PDCCH to the terminal device.

It should be noted that a sequence of step 600 and step 602 may not be distinguished.

Case 2: The terminal device sends, to the network device, indication information indicating that the terminal device adjusts the current receiving state to the first receiving state.

Terminal side indication information: The terminal device sends information for compensating for the PDCCH to the network device.

The terminal side indication information indicates that the network device compensates for the PDCCH when sending the PDCCH to the terminal device.

For example, when the terminal device needs to switch the current second receiving state to the first receiving state to reduce the power consumption of the terminal, the terminal device sends the terminal side indication information to the network device. After receiving the terminal side indication information, the network device compensates for the PDCCH that needs to be sent to the terminal device, to ensure that when the terminal device adjusts the receiving state to the first receiving state, receiving performance of the PDCCH may not be affected, and the PDCCH sent by the network device is normally received.

Further, the terminal side indication information may include a compensation factor determined by the terminal device. That is, the terminal device sends the compensation factor to the network device. After receiving the compensation factor, the network device may determine that the receiving state of the terminal device is the first receiving state. Then, the network device compensates, based on the compensation factor, for the PDCCH that needs to be sent to the terminal device, to determine the parameter of the PDCCH. Because the terminal device better learns of downlink channel quality, the terminal device may determine the compensation factor, and report the compensation factor to the network device.

Optionally, there may be one or more compensation factors included in the terminal side indication information. In other words, the terminal device may determine a plurality of compensation factors, and report the plurality of determined compensation factors to the network device via the terminal side indication information.

Further, the terminal side indication information may further include information about at least two pieces of CSI and/or at least two CQIs. For example, it is assumed that the quantity that is of antennas for receiving the PDCCH and that corresponds to the second receiving state of the terminal device is 4Rx, and the quantity that is of antennas for receiving the PDCCH and that corresponds to the first receiving state is 2Rx. When the terminal device needs to switch the current receiving state of receiving the PDCCH to the first receiving state to reduce the power consumption of the terminal device, the terminal device receives the CSI-RS by using the receive antenna quantity in the second receiving state, that is, receives the CSI-RS by using 4Rx, and obtains, through calculation by using the CSI-RS received by using the four antennas, CSI corresponding to the second receiving state. In addition, the terminal device obtains, through calculation by using a CSI-RS received by using any two of the four antennas, CSI corresponding to the first receiving state. After determining the CSI corresponding to the first receiving state and the CSI corresponding to the second receiving state, the terminal device sends the terminal side indication information including the information about the at least two types of CSI and/or CQIs to the network device. After receiving the terminal side indication information, the network device may determine that the receiving state of the terminal device is the first receiving state. Then, when sending the PDCCH to the terminal device, the network device determines the parameter of the PDCCH based on CSI and/or a CQI that correspond/corresponds to the antenna quantity in the first receiving state.

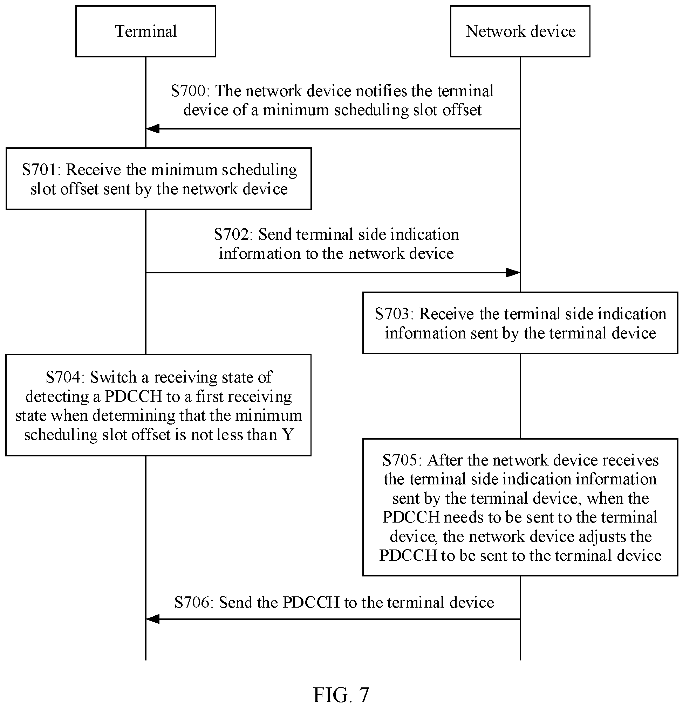

As shown in FIG. 7, in the embodiments of this application, specific steps of a procedure of reducing the power consumption of the terminal device by sending, by the terminal device, the terminal side indication information 1 to the network device include the following:

Step 700: The network device notifies the terminal device of minimum K0.
Step 701: The terminal device receives minimum K0 sent by the network device.
Step 702: The terminal device sends the terminal side indication information to the network device.

If the terminal side indication information includes the information about the at least two pieces of CSI and/or the at least two CQIs, before step 702, the terminal device further needs to receive the CSI-RS by using the receive antenna quantity in the second receiving state, and calculate the CSI and/or the CQI that correspond/corresponds to the first receiving state and the CSI and/or the CQI that correspond/corresponds to the second receiving state.

Step 703: The network device sends the terminal side indication information sent by the terminal device.

Step 704: When determining that minimum K0 is not less than Y, the terminal device switches the receiving state of detecting the PDCCH to the first receiving state, where Y is switching time required for the terminal device to turn on and/or turn off an antenna.

Step 705: After receiving the terminal side indication information sent by the terminal device, the network device determines the parameter of the PDCCH when sending the PDCCH to the terminal device.

Optionally, when the terminal side indication information includes the compensation factor, the network device may compensate, based on the compensation factor, for the PDCCH that needs to be sent to the terminal device, to determine the parameter of the PDCCH.

Optionally, when the terminal side indication information includes the CSI and/or the CQI that correspond/corresponds to the first receiving state and the CSI and/or the CQI that correspond/corresponds to the second receiving state, the network device determines, when sending the PDCCH to the terminal device, the parameter of the PDCCH based on the CSI and/or the CQI that correspond/corresponds to the first receiving state.

Optionally, when the terminal side indication information indicates only that the network device compensates for the PDCCH when sending the PDCCH to the terminal device, that is, does not need to indicate the compensation factor and CSI in different receiving states, the network device may compensate, when sending the PDCCH to the terminal device, the PDCCH based on the compensation factor specified in the protocol or a compensation factor determined by the network device, to determine the parameter of the PDCCH.

Step 706: The network device sends the PDCCH to the terminal device.

It should be noted that descriptions of the first receiving state, the second receiving state, minimum K0, and the like in the embodiments in FIG. 5 to FIG. 7 are similar to those in FIG. 3, and details are not described herein again.

Optionally, in the embodiments of this application, threshold duration may be further set for the network device and/or the terminal device, to trigger the network device to compensate for the PDCCH that needs to be sent and trigger the terminal device to switch the current receiving state to the first receiving state, when information for requesting data scheduling is not sent to the terminal device within the threshold duration.

For example, the threshold duration set for the network device and the terminal device is A milliseconds. If the network device does not send the information for requesting data scheduling to the terminal device within A milliseconds, the network device needs to compensate for the PDCCH when the network device sends the PDCCH to the terminal device after the threshold duration. If the terminal device does not receive, within A milliseconds, the information for requesting data scheduling sent by the network device, the terminal device switches the current receiving state to the first receiving state after the threshold duration.

Optionally, a timer may be added to the network device and/or the terminal device, to determine whether the threshold duration is reached.

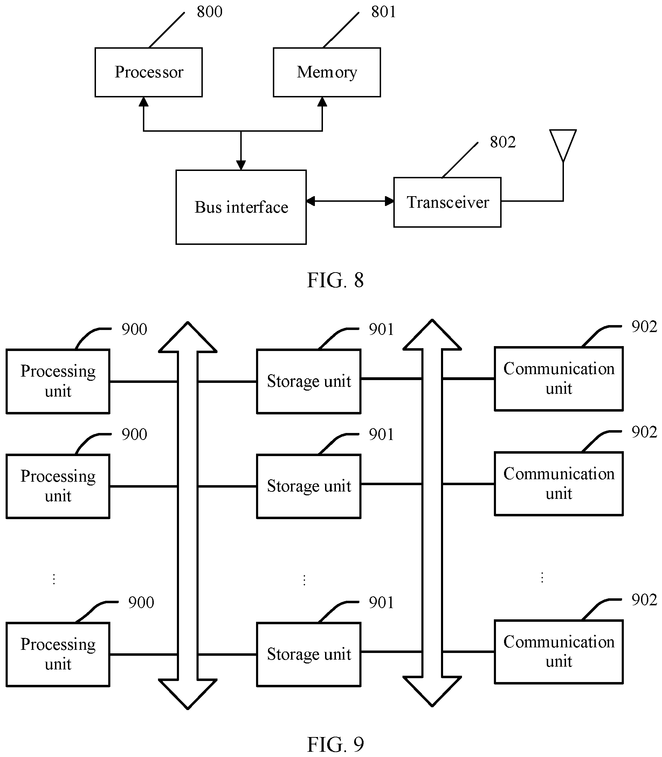

Based on the foregoing embodiments, as shown in FIG. 8, an embodiment of this application further provides a terminal device. The terminal device includes a processor 800, a memory 801, and a transceiver 802.

The processor 800 is responsible for managing a bus architecture and normal processing, and the memory 801 may store data used when the processor 800 performs an operation. The transceiver 802 is configured to receive and send data under control of the processor 800 to perform data communication with the memory 801.

The bus architecture may include any quantity of interconnected buses and bridges that are specifically connected by using various circuits of one or more processors represented by the processor 800 and a memory represented by the memory 801. The bus architecture may further connect various other circuits such as a peripheral device, a voltage stabilizer, and a power management circuit. These are well known in the art, and therefore are not further described in this specification. A bus interface provides an interface. The processor 800 is responsible for managing the bus architecture and normal processing, and the memory 801 may store the data used when the processor 800 performs the operation.

The procedure disclosed in the embodiments of this application may be applied to the processor 800, or may be implemented by the processor 800. In an implementation process, the steps in the signal processing procedure may be implemented by using a hardware integrated logical circuit in the processor 800, or by using instructions in a form of software. The processor 800 may be a general-purpose processor, a digital signal processor, an application-specific integrated circuit, a field programmable gate array or another programmable logic device, a discrete gate or a transistor logic device, or a discrete hardware component. The processor 800 may implement or perform the methods, steps, and logical block diagrams disclosed in the embodiments of this application. The general-purpose processor may be a microprocessor, any conventional processor, or the like. The steps of the methods disclosed with reference to the embodiments of this application may be directly performed and completed by a hardware processor, or may be performed and completed by using a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory 801. The processor 800 reads information in the memory 801 and completes the steps in the signal processing procedure in combination with hardware of the processor 800.

Specifically, the processor 800 is configured to read a program in the memory 801 and execute the program to perform the following operations:

receiving a minimum scheduling slot offset indicated by a network device; receiving first indication information sent by the network device; or sending second indication information to the network device, where the first indication information and/or the second indication information are/is used to determine a first receiving state used by the terminal device to detect a physical downlink control channel PDCCH; and detecting the PDCCH by using the first receiving state when the minimum scheduling slot offset is greater than 0.

In this embodiment of this application, in addition to receiving minimum K0 indicated by the network device, the terminal device further receives a time domain resource assignment list that is of a PDSCH and that is configured by the network device by using RRC signaling. The time domain resource assignment list includes a set of slot offsets K0 between the PDCCH and the scheduled PDSCH, a set of start symbols of the PDSCH in a slot, and a set of lengths of the PDSCH in the slot. A value of K0 in the K0 set may be greater than or equal to 0, and a plurality of values may be configured for K0. For example, the slot offsets K0 may be configured as {0, 1, 2, 3, 4, 5, 6}.

Minimum K0 indicated by the network device and received by the terminal device may be one value in the K0 set, or may be another value. Minimum K0 reflects a minimum available value of K0 in the K0 set. For example, if Minimum K0=1, available values of K0 in the K0 set are 1, 2, 3, 4, 5, and 6.

A manner in which the terminal device receives minimum K0 indicated by the network device is not limited in this application. For example, the network device may directly or indirectly indicate minimum K0 to the terminal device by using RRC signaling, MAC CE signaling, or DCI signaling. Alternatively, the terminal device may obtain minimum K0 directly or indirectly.

In an implementation, the first receiving state is a receiving manner that can reduce power consumption of the terminal device. When the terminal device receives the PDCCH by using different receiving states, the power consumption of the terminal device is different.

Further, when the terminal device does not save energy in this embodiment of this application, a receiving state of the terminal device may be represented as a second receiving state.

In a possible implementation, the first receiving state indicates that the terminal device detects the PDCCH by using a first antenna quantity, where the first antenna quantity is less than a maximum receive antenna quantity configured or supported by the terminal device.

In a possible implementation, the first indication information includes at least one of the following:

when the network device needs to send the PDCCH to the terminal device, the network device compensates for the to-be-sent PDCCH;
the terminal device reports information about at least two types of channel state information CSI and/or channel quality indicators CQIs; or
a compensation factor used to assist the network device in determining a parameter of the PDCCH.

Optionally, the compensation factor in this embodiment of this application is mainly used to compensate for one or more of factors such as an AL, an SNR, a CQI, CSI, and a BLER.

In a possible implementation, the second indication information indicates at least one of the following:

a compensation factor used to assist the network device in determining a parameter of the PDCCH;
information that is about at least two types of CSI and/or CQIs and that is determined by the terminal device; or

the network device compensates for the PDCCH when sending the PDCCH to the terminal device.

In a possible implementation, the processor 800 is specifically configured to:
detect the PDCCH by using the first receiving state when the minimum scheduling slot offset is not less than Y, where Y is time required for the terminal device to turn on and/or turn off an antenna.

In a possible implementation, the processor 800 is further configured to:
receive, by the terminal device, a signal state information reference signal CSI-RS by using the maximum receive antenna quantity configured or supported by the terminal device, and calculate N pieces of CSI and/or N CQIs that correspond to N receiving states; and report, by the terminal device, the N pieces of CSI and/or N CQIs to the network device, where the N receiving states include the first receiving state.

In a possible implementation, the processor 800 is further configured to:

receive, by the terminal device, a CSI-RS by using a second receiving state, and calculate first CSI and/or a first CQI that correspond/corresponds to the first receiving state and second CSI and/or a second CQI that correspond/corresponds to the second receiving state; and

use, by the terminal device, the first CSI and/or the first CQI and the second CSI and/or the second CQI as the CSI and/or the CQIs that are reported to the network device, where

the first receive antenna quantity corresponding to the first receiving state is less than a second antenna quantity corresponding to the second receiving state, and the second antenna quantity is not greater than the maximum receive antenna quantity configured or supported by the terminal device.

In a possible implementation, the first indication information includes the compensation factor used to assist the network device in determining the parameter of the PDCCH.

In a possible implementation, the processor 800 is specifically configured to:
if information that is for requesting data scheduling and that is sent by the network device is not received within threshold duration, detect the PDCCH by using the first receiving state when the minimum scheduling slot offset is greater than 0.

As shown in FIG. 9, this application provides a terminal device. The terminal device includes at least one processing unit 900, at least one storage unit 901, and at least one communication unit 902. The communication unit 902 is configured to receive and send data under control of the processing unit 900. The storage unit 901 stores program code. When the program code is executed by the processing unit 900, the processing unit 900 is enabled to perform the following process:
receiving a minimum scheduling slot offset indicated by a network device; receiving first indication information sent by the network device; or sending second indication information to the network device, where the first indication information and/or the second indication information are/is used to determine a first receiving state used by the terminal device to detect a physical downlink control channel PDCCH; and detecting the PDCCH by using the first receiving state when the minimum scheduling slot offset is greater than 0.

In this embodiment of this application, in addition to receiving minimum K0 indicated by the network device, the terminal device further receives a time domain resource assignment list that is of a PDSCH and that is configured by the network device by using RRC signaling. The time domain resource assignment list includes a set of slot offsets K0 between the PDCCH and the scheduled PDSCH, a set of start symbols of the PDSCH in a slot, and a set of lengths of the PDSCH in the slot. A value of K0 in the K0 set may be greater than or equal to 0, and a plurality of values may be configured for K0. For example, the slot offsets K0 may be configured as {0, 1, 2, 3, 4, 5, 6}.

Minimum K0 indicated by the network device and received by the terminal device may be one value in the K0 set, or may be another value. Minimum K0 reflects a minimum available value of K0 in the K0 set. For example, if Minimum K0=1, available values of K0 in the K0 set are 1, 2, 3, 4, 5, and 6.

A manner in which the terminal device receives minimum K0 indicated by the network device is not limited in this application. For example, the network device may directly or indirectly indicate minimum K0 to the terminal device by using RRC signaling, MAC CE signaling, or DCI signaling. Alternatively, the terminal device may obtain minimum K0 directly or indirectly.

In an implementation, the first receiving state is a receiving manner that can reduce power consumption of the terminal device. When the terminal device receives the PDCCH by using different receiving states, the power consumption of the terminal device is different.

Further, when the terminal device does not save energy in this embodiment of this application, a receiving state of the terminal device may be represented as a second receiving state.

In a possible implementation, the first receiving state indicates that the terminal device detects the PDCCH by using a first antenna quantity.

The first antenna quantity is less than a maximum receive antenna quantity configured or supported by the terminal device.

In a possible implementation, the first indication information includes at least one of the following:

when the network device needs to send the PDCCH to the terminal device, the network device compensates for the to-be-sent PDCCH;
the terminal device reports information about at least two types of channel state information CSI and/or channel quality indicators CQIs; or
a compensation factor used to assist the network device in determining a parameter of the PDCCH.

In a possible implementation, the second indication information indicates at least one of the following:

a compensation factor used to assist the network device in determining a parameter of the PDCCH;
information that is about CSI and/or CQIs in at least two receiving states and that is determined by the terminal device; or
the network device compensates for the PDCCH when sending the PDCCH to the terminal device.

Optionally, the compensation factor in this embodiment of this application is mainly used to compensate for one or more of factors such as an AL, an SNR, a CQI, CSI, and a BLER.
In a possible implementation, the processing unit 900 is specifically configured to:
detect the PDCCH by using the first receiving state when the minimum scheduling slot offset is not less than Y, where Y is time required for the terminal device to turn on and/or turn off an antenna.
In a possible implementation, the processing unit 900 is further configured to:
receive, by the terminal device, a signal state information reference signal CSI-RS by using the maximum receive antenna quantity configured or supported by the terminal device, and calculate N pieces of CSI and/or N CQIs that correspond to N receiving states; and report, by the terminal device, the N pieces of CSI and/or N CQIs to the network device, where the N receiving states include the first receiving state.
In a possible implementation, the processing unit 900 is further configured to:

receive, by the terminal device, a CSI-RS by using a second receiving state, and calculate first CSI and/or a first CQI that correspond/corresponds to the first receiving state and second CSI and/or a second CQI that correspond/corresponds to the second receiving state; and
use, by the terminal device, the first CSI and/or the first CQI and the second CSI and/or the second CQI as the CSI and/or the CQIs that are reported to the network device, where
the first receive antenna quantity corresponding to the first receiving state is less than a second antenna quantity corresponding to the second receiving state, and the second antenna quantity is not greater than the maximum receive antenna quantity configured or supported by the terminal device.

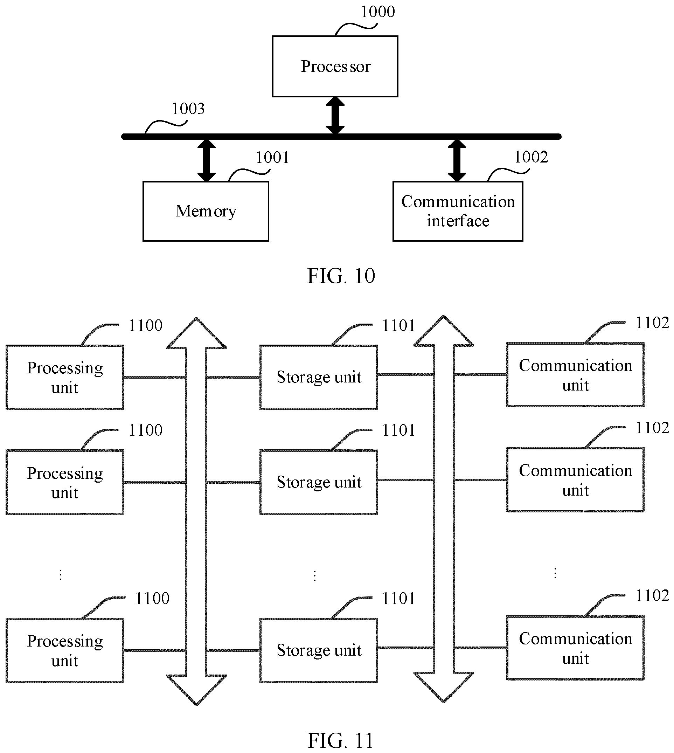

In a possible implementation, the first indication information includes the compensation factor used to assist the network device in determining the parameter of the PDCCH.
In a possible implementation, the processing unit 900 is specifically configured to:
if information that is for requesting data scheduling and that is sent by the network device is not received within threshold duration, detect the PDCCH by using the first receiving state when the minimum scheduling slot offset is greater than 0.
As shown in FIG. 10, this application provides a network device. The network device includes a processor 1000, a memory 1001, and a communication interface 1002.
The processor 1000 is responsible for managing a bus architecture and normal processing, and the memory 1001 may store data used when the processor 1000 performs an operation. The communication interface 1002 is configured to receive and send data under control of the processor 1000 to perform data communication with the memory 1001.
The processor 1000 may be a central processing unit (central processing unit, CPU), a network processor (network processor, NP), or a combination of the CPU and the NP. The processor 1000 may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The memory 1001 may include: any medium that can store program code, such as a USB flash drive, a removable hard disk, a read-only memory (read-only memory, ROM), a random access memory (random access memory, RAM), a magnetic disk, or a compact disc.
The processor 1000, the memory 1001, and the communication interface 1002 are connected to each other. Optionally, the processor 1000, the memory 1001, and the communication interface 1002 may be connected to each other by using a bus 1003. The bus 1003 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 10, but this does not mean that there is only one bus or only one type of bus.

Specifically, the processor 1000 is configured to read a program in the memory 1001 and execute the program to perform the following operations:

indicating a minimum scheduling slot offset to a terminal device; and receiving second indication information sent by the terminal device; or sending, by the network device, first indication information to the terminal device, where the first indication information and/or the second indication information are/is used to determine a first receiving state used by the terminal device to detect a physical downlink control channel PDCCH; and sending, to the terminal device when the minimum scheduling slot offset is greater than 0 and the network device needs to send a PDCCH to the terminal device, a PDCCH applicable to being received in the first receiving state.

Further, in addition to indicating minimum K0 to the terminal device, the network device further configures a time domain resource assignment list of a PDSCH for the terminal device by using radio resource control (Radio Resource Control, RRC) signaling.

The time domain resource assignment list includes a set of slot offsets K0 between the PDCCH and the scheduled PDSCH, a set of start symbols of the PDSCH in a slot, and a set of lengths of the PDSCH in the slot. A value of K0 in the K0 set may be greater than or equal to 0, and a plurality of values may be configured for K0. For example, the slot offsets K0 may be configured as {0, 1, 2, 3, 4, 5, 6}.

Minimum K0 indicated by the network device to the terminal device may be one value in the K0 set, or may be another value. Minimum K0 reflects a minimum available value of K0 in the K0 set. For example, if Minimum K0=1, available values of K0 in the K0 set are 1, 2, 3, 4, 5, and 6.

A manner in which the network device indicates minimum K0 to the terminal device is not limited in this application. For example, the network device may directly or indirectly indicate minimum K0 to the terminal device by using RRC signaling, MAC CE signaling, or DCI signaling. Alternatively, the terminal device may obtain minimum K0 directly or indirectly.

In an implementation, the first receiving state is a receiving manner that can reduce power consumption of the terminal device. When the terminal device receives the PDCCH by using different receiving states, the power consumption of the terminal device is different.

Further, when the terminal device does not save energy in this embodiment of this application, a receiving state of the terminal device may be represented as a second receiving state.

In a possible implementation, the first receiving state indicates that the terminal device detects the PDCCH by using a first antenna quantity, where the first antenna quantity is less than a maximum receive antenna quantity configured or supported by the terminal device.

In a possible implementation, the first indication information includes at least one of the following:

when the network device needs to send the PDCCH to the terminal device, the network device compensates for the to-be-sent PDCCH;
the terminal device reports information about at least two types of channel state information CSI and/or channel quality indicators CQIs; or
a compensation factor used to assist the network device in determining a parameter of the PDCCH.

In a possible implementation, the second indication information indicates at least one of the following:

a compensation factor used to assist the network device in determining a parameter of the PDCCH;
information that is about CSI and/or CQIs in at least two receiving states and that is determined by the terminal device; or
the network device compensates for the PDCCH when sending the PDCCH to the terminal device.

In a possible implementation, the processor 1000 is specifically configured to:

send, to the terminal device when the minimum scheduling slot offset is not less than Y and the network device needs to send the PDCCH to the terminal device, the PDCCH applicable to being received in the first receiving state, where Y is time required for the terminal device to turn on and/or turn off an antenna.

In a possible implementation, the processor 1000 is further configured to:

receive, by the network device, N pieces of CSI and/or N CQIs reported by the terminal device, where the N pieces of CSI and/or the N CQIs are obtained through measurement after the terminal device receives a CSI-RS by using the configured or supported maximum receive antenna quantity, and the N pieces of CSI and/or the N CQIs include CSI and/or a CQI that correspond/corresponds to the first receiving state.

In a possible implementation, the processor 1000 is further configured to:

receive, by the network device, first CSI and/or a first CQI that correspond/corresponds to the first antenna quantity and second CSI and/or a second CQI that correspond/corresponds to a second antenna quantity that are reported by the terminal device.

The first CSI and/or the first CQI and the second CSI and/or the second CQI are obtained through calculation after the terminal device receives a CSI-RS by using a second receiving state, the first antenna quantity corresponding to the first receiving state is less than the second antenna quantity corresponding to the second receiving state, and the second antenna quantity is not greater than the maximum receive antenna quantity configured or supported by the terminal device.

In a possible implementation, the first indication information includes the compensation factor used to assist the network device in determining the parameter of the PDCCH.

In a possible implementation, the processor 1000 is further configured to:

determine a parameter of the PDCCH applicable to being received in the first receiving state.

Optionally, the compensation factor in this embodiment of this application is mainly used to compensate for one or more of factors such as an AL, an SNR, a CQI, CSI, and a BLER.

In a possible implementation, the processor 1000 determines, in the following manner, the PDCCH applicable to the first receiving state:

determining, based on a predefined compensation factor, the parameter of the PDCCH applicable to the first receiving state;

determining, based on the compensation factor sent by the terminal device, the parameter of the PDCCH applicable to the first receiving state;

determining, based on the compensation factor configured by the network device, the parameter of the PDCCH applicable to the first receiving state; or

determining, based on information that is reported by the terminal device and that includes the CSI and/or the CQI that correspond/corresponds to the first receiving state, the parameter of the PDCCH applicable to the first receiving state.

In a possible implementation, the processor 1000 is specifically configured to:

if the network device does not send, to the terminal device within threshold duration, information for requesting data scheduling, compensate, when the minimum scheduling slot offset is greater than 0, for the PDCCH to be sent to the terminal device.

Optionally, in this embodiment of this application, the network device may define a same compensation factor or different compensation factors for different terminal devices. A value of the compensation factor may be related to a location or cell coverage of the terminal device. For example, a smaller compensation factor is configured for a terminal device at a cell center or with good coverage, and a larger compensation factor is configured for a terminal device at a cell edge or with poor coverage.

As shown in FIG. 11, this application provides a network device. The network device includes at least one processing unit 1100, at least one storage unit 1101, and at least one communication unit 1102. The communication unit 1102 is configured to receive and send data under control of the processing unit 1100. The storage unit 1101 stores program code. When the program code is executed by the processing unit 1100, the processing unit 1100 is enabled to perform the following process:

indicating a minimum scheduling slot offset to a terminal device; and receiving second indication information sent by the terminal device; or sending, by the network device, first indication information to the terminal device, where the first indication information and/or the second indication information are/is used to determine a first receiving state used by the terminal device to detect a physical downlink control channel PDCCH; and sending, to the terminal device when the minimum scheduling slot offset is greater than 0 and the network device needs to send a PDCCH to the terminal device, a PDCCH applicable to being received in the first receiving state.

Further, in addition to indicating minimum K0 to the terminal device, the network device further configures a time domain resource assignment list of a PDSCH for the terminal device by using radio resource control (Radio Resource Control, RRC) signaling.

The time domain resource assignment list includes a set of slot offsets K0 between the PDCCH and the scheduled PDSCH, a set of start symbols of the PDSCH in a slot, and a set of lengths of the PDSCH in the slot. A value of K0 in the K0 set may be greater than or equal to 0, and a plurality of values may be configured for K0. For example, the slot offsets K0 may be configured as {0, 1, 2, 3, 4, 5, 6}.

Minimum K0 indicated by the network device to the terminal device may be one value in the K0 set, or may be another value. Minimum K0 reflects a minimum available value of K0 in the K0 set. For example, if Minimum K0=1, available values of K0 in the K0 set are 1, 2, 3, 4, 5, and 6.

A manner in which the network device indicates minimum K0 to the terminal device is not limited in this application. For example, the network device may directly or indirectly indicate minimum K0 to the terminal device by using RRC signaling, MAC CE signaling, or DCI signaling. Alternatively, the terminal device may obtain minimum K0 directly or indirectly.

In an implementation, the first receiving state is a receiving manner that can reduce power consumption of the terminal device. When the terminal device receives the PDCCH by using different receiving states, the power consumption of the terminal device is different.

Further, when the terminal device does not save energy in this embodiment of this application, a receiving state of the terminal device may be represented as a second receiving state.

In a possible implementation, the first receiving state indicates that the terminal device detects the PDCCH by using a first antenna quantity, where the first antenna quantity is less than a maximum receive antenna quantity configured or supported by the terminal device.

In a possible implementation, the first indication information includes at least one of the following:

when the network device needs to send the PDCCH to the terminal device, the network device compensates for the to-be-sent PDCCH;
the terminal device reports information about at least two types of channel state information CSI and/or channel quality indicators CQIs; or
a compensation factor used to assist the network device in determining a parameter of the PDCCH.

In a possible implementation, the second indication information indicates at least one of the following:

a compensation factor used to assist the network device in determining a parameter of the PDCCH;
information that is about CSI and/or CQIs in at least two receiving states and that is determined by the terminal device; or
the network device compensates for the PDCCH when sending the PDCCH to the terminal device.

In a possible implementation, the processing unit 1100 is specifically configured to:
send, to the terminal device when the minimum scheduling slot offset is not less than Y and the network device needs to send the PDCCH to the terminal device, the PDCCH applicable to being received in the first receiving state, where Y is time required for the terminal device to turn on and/or turn off an antenna.

In a possible implementation, the processing unit 1100 is further configured to:
receive, by the network device, N pieces of CSI and/or N CQIs reported by the terminal device.

The N pieces of CSI and/or the N CQIs are obtained through measurement after the terminal device receives a CSI-RS by using the configured or supported maximum receive antenna quantity, and the N pieces of CSI and/or the N CQIs include CSI and/or a CQI that correspond/corresponds to the first receiving state.

In a possible implementation, the processing unit 1100 is further configured to:
receive, by the network device, first CSI and/or a first CQI that correspond/corresponds to the first antenna quantity and second CSI and/or a second CQI that correspond/corresponds to a second antenna quantity that are reported by the terminal device.

The first CSI and/or the first CQI and the second CSI and/or the second CQI are obtained through calculation after the terminal device receives a CSI-RS by using a second receiving state, the first antenna quantity corresponding to the first receiving state is less than the second antenna quantity corresponding to the second receiving state, and the second antenna quantity is not greater than the maximum receive antenna quantity configured or supported by the terminal device. In a possible implementation, the first indication information includes the compensation factor used to assist the network device in determining the parameter of the PDCCH.

In a possible implementation, the processing unit 1100 is further configured to:
determine a parameter of the PDCCH applicable to being received in the first receiving state.

In a possible implementation, the processing unit 1100 is specifically configured to:
if the network device does not send, to the terminal device within threshold duration, information for requesting data scheduling, compensate, when the minimum scheduling slot offset is greater than 0, for the PDCCH to be sent to the terminal device.

Optionally, the compensation factor in this embodiment of this application is mainly used to compensate for one or more of factors such as an AL, an SNR, a CQI, CSI, and a BLER.

In a possible implementation, the processing unit 1100 determines, in the following manner, the parameter of the PDCCH applicable to the first receiving state:

determining, based on a predefined compensation factor, the parameter of the PDCCH applicable to the first receiving state;

determining, based on the compensation factor sent by the terminal device, the parameter of the PDCCH applicable to the first receiving state;

determining, based on the compensation factor configured by the network device, the parameter of the PDCCH applicable to the first receiving state; or

determining, based on information that is reported by the terminal device and that includes the CSI and/or the CQI that correspond/corresponds to the first receiving state, the parameter of the PDCCH applicable to the first receiving state.

Optionally, in this embodiment of this application, the network device may define a same compensation factor or different compensation factors for different terminal devices. A value of the compensation factor may be related to a location or cell coverage of the terminal device. For example, a smaller compensation factor is configured for a terminal device at a cell center or with good coverage, and a larger compensation factor is configured for a terminal device at a cell edge or with poor coverage.

In some possible implementations, aspects of the communication transmission method provided in the embodiments of this application may be further implemented in a form of a program product. The program product includes program code. When the program code is run on a computer device, the program code is used to enable the computer device to perform the steps in the communication transmission method according to various example implementations of this application described in this specification.

The program product may be any combination of one or more readable media. The readable medium may be a readable signal medium or a readable storage medium. For example, the readable storage medium may be, but is not limited to, an electrical, magnetic, optical, electromagnetic, infrared, or semiconductor system, apparatus or device, or any combination thereof. More specific examples (non-exhaustive list) of the readable storage medium include: an electrical connection having one or more conducting wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any appropriate combination thereof.

A program product for performing communication transmission in an implementation of this application may use a portable compact disc read-only memory (CD-ROM) and include program code, and may run on a server device. However, the program product in this application is not limited thereto. In this specification, the readable storage medium may be any tangible medium that includes or stores a program. The program may be used by information transmission, an apparatus, or a device, or used in combination with the program.

The readable signal medium may include a data signal propagated in a baseband or as a part of a carrier, where the data signal carries readable program code. The propagated data signal may be in a plurality of forms, including but not limited to an electromagnetic signal, an optical signal, or any appropriate combination thereof. The readable signal medium may alternatively be any readable medium other than the readable storage medium. The readable medium may send, propagate, or transmit a program used by or in combination with a periodic network action system, apparatus, or device.

The program code included in the readable medium may be transmitted by using any appropriate medium, including but not limited to a wireless medium, a wired medium, an optical cable, an RF medium, or any appropriate combination thereof.

The program code used to execute the operations of this application may be written in any combination of one or more program design languages. The program design languages include object-oriented program design languages such as Java and C++, and further include a conventional procedural program design language such as a "C" language or a similar program design language. The program code may be completely executed on a computing device of a user, partially executed on user equipment, executed as an independent software package, partially executed on a computing device of a user and partially executed on a remote computing device, or completely executed on a remote computing device or a server. When the program code is executed on the remote computing device, the remote computing device may be connected to the computing device of the user by using any type of network, including a local area network (LAN) or a wide area network (WAN), or may be connected to an external computing device.

An embodiment of this application further provides a computing device readable storage medium for a method for performing communication transmission by a terminal device. That is, content is not lost after a case of power-off. The storage medium stores a software program including program code. When the program code is run on a computing device, when the software program is read and executed by one or more processors, any communication transmission solution in the foregoing embodiments of this application can be implemented.

An embodiment of this application further provides a computing device readable storage medium for a method for performing communication transmission by a network device. That is, content is not lost after a case of power-off.

The storage medium stores a software program including program code. When the program code is run on a computing device, when the software program is read and executed by one or more processors, any communication transmission solution of the network device in the foregoing embodiments of this application can be implemented.

The foregoing describes this application with reference to the block diagrams and/or flowcharts of the method, the apparatus (system), and/or the computer program product in the embodiments of this application. It should be understood that a block of the block diagrams and/or flowcharts and a combination of blocks in the block diagrams and/or flowcharts, can be implemented by using computer program instructions. These computer program instructions may be provided to a processor of a general-purpose computer, a processor of a special-purpose computer, and/or another programmable data processing apparatus to produce a machine, so that the instructions executed by the processor of the computer and/or the another programmable data processing apparatus create a method for implementing a specified function/action in a block in the block diagrams and/or flowcharts.

Correspondingly, this application may be further implemented by using hardware and/or software (including firmware, resident software, microcode, and the like). Still further, this application may be in a form of a computer program product on a computer-usable or computer-readable storage medium. The computer program product has computer-usable or computer-readable program code implemented in the medium, so that the computer-usable or computer-readable is used by an instruction execution system or used in combination with an instruction execution system. In the context of this application, the computer-usable or computer-readable medium may be any medium, and may include, store, communicate, transmit, or transfer a program, for use by an instruction execution system, apparatus, or device or used in combination with an instruction execution system, apparatus, or device.

Although this application is described with reference to specific features and the embodiments thereof, obviously, various modifications and combinations may be made to them without departing from the spirit and scope of this application. Correspondingly, the specification and accompanying drawings are merely example descriptions of this application defined by the appended claims, and are considered as any of and all modifications, variations, combinations or equivalents that cover the scope of this application. It is clearly that a person skilled in the art can make various modifications and variations to this application without departing from the scope of this application. In this way, this application is intended to cover these modifications and variations of this application provided that they fall within the scope of the claims of this application and their equivalent technologies.

**Claims**

1. A communication transmission method, comprising:

   receiving, by a terminal device, a minimum scheduling slot offset indicated by a network device;
   receiving, by the terminal device, first indication information sent by the network device; or sending, by the terminal device, second indication information to the network device, wherein the first indication information and/or the second indication information are/is used to determine a first receiving state used by the terminal device to detect a physical downlink control channel PDCCH; and
   detecting, by the terminal device, the PDCCH by using the first receiving state when the minimum scheduling slot offset is greater than 0.

2. The method according to claim 1, wherein the first receiving state indicates that the terminal device detects the PDCCH by using a first antenna quantity, wherein
   the first antenna quantity is less than a maximum receive antenna quantity configured or supported by the terminal device.

3. The method according to claim 1 or 2, wherein the first indication information comprises at least one of the following:

   when the network device needs to send the PDCCH to the terminal device, the network device compensates for the to-be-sent PDCCH;
   the terminal device reports information about channel state information CSI and/or channel quality indicators CQIs in at least two receiving states; or
   a compensation factor used to assist the network device in determining a parameter of the PDCCH.

4. The method according to claim 1 or 2, wherein the second indication information indicates at least one of the following:

   a compensation factor used to assist the network device in determining a parameter of the PDCCH;
   information that is about CSI and/or CQIs in at least two receiving states and that is determined by the terminal device; or
the network device compensates for the PDCCH when sending the PDCCH to the terminal device.

5. The method according to claim 2, wherein the detecting, by the terminal device, the PDCCH by using the first receiving state when the minimum scheduling slot offset is greater than 0 comprises:

detecting, by the terminal device, the PDCCH by using the first receiving state when the minimum scheduling slot offset is not less than Y, wherein
Y is time required for the terminal device to turn on and/or turn off an antenna.

6. The method according to claim 3 or 4, wherein before the terminal device reports the information about the CSI and/or the CQIs in the at least two receiving states to the network device, the method further comprises:

receiving, by the terminal device, a signal state information reference signal CSI-RS by using the maximum receive antenna quantity configured or supported by the terminal device, and calculating N pieces of CSI and/or N CQIs that correspond to N receiving states; and
reporting, by the terminal device, the N pieces of CSI and/or N CQIs to the network device, wherein
the N receiving states comprise the first receiving state.

7. The method according to claim 3 or 4, wherein before the reporting, by the terminal device, information about CSI and/or CQIs in at least two receiving states, the method further comprises:

receiving, by the terminal device, a CSI-RS by using a receive antenna quantity in a second receiving state, and calculating first CSI and/or a first CQI that correspond/corresponds to the first receiving state and second CSI and/or a second CQI that correspond/corresponds to the second receiving state; and
reporting, by the terminal device, the first CSI and/or the first CQI and the second CSI and/or the second CQI, wherein
the first receive antenna quantity corresponding to the first receiving state is less than the second antenna quantity corresponding to the second receiving state, and the second antenna quantity is not greater than the maximum receive antenna quantity configured or supported by the terminal device.

8. A communication transmission method, comprising:

indicating, by a network device, a minimum scheduling slot offset to a terminal device;
receiving, by the network device, second indication information sent by the terminal device; or sending, by the network device, first indication information to the terminal device, wherein the first indication information and/or the second indication information are/is used to determine a first receiving state used by the terminal device to detect a physical downlink control channel PDCCH; and
sending, by the network device to the terminal device when the minimum scheduling slot offset is greater than 0 and the network device needs to send a PDCCH to the terminal device, a PDCCH applicable to being received in the first receiving state.

9. The method according to claim 8, wherein the first receiving state indicates that the terminal device detects the PDCCH by using a first antenna quantity, wherein
the first antenna quantity is less than a maximum receive antenna quantity configured or supported by the terminal device.

10. The method according to claim 8 or 9, wherein the first indication information comprises at least one of the following:

when the network device needs to send the PDCCH to the terminal device, the network device compensates for the to-be-sent PDCCH;
the terminal device reports information about channel state information CSI and/or channel quality indicators CQIs in at least two receiving states; or
a compensation factor used to assist the network device in determining a parameter of the PDCCH.

11. The method according to claim 8 or 9, wherein the second indication information indicates at least one of the following:

a compensation factor used to assist the network device in determining a parameter of the PDCCH;

information that is about CSI and/or CQIs in at least two receiving states and that is determined by the terminal device; or

the network device compensates for the PDCCH when sending the PDCCH to the terminal device.

12. The method according to claim 9, wherein the sending, by the network device to the terminal device when the minimum scheduling slot offset is greater than 0 and the network device needs to send a PDCCH to the terminal device, a PDCCH applicable to being received in the first receiving state comprises:

sending, by the network device to the terminal device when the minimum scheduling slot offset is not less than Y and the network device needs to send the PDCCH to the terminal device, the PDCCH applicable to being received in the first receiving state, wherein
Y is time required for the terminal device to turn on and/or turn off an antenna.

13. The method according to claim 10 or 11, wherein that the network device receives the information about the CSI and/or the CQIs in the at least two receiving states that is reported by the terminal device comprises:

receiving, by the network device, N pieces of CSI and/or N CQIs reported by the terminal device, wherein the N pieces of CSI and/or the N CQIs are obtained through measurement after the terminal device receives a CSI-RS by using the configured or supported maximum receive antenna quantity, and the N pieces of CSI and/or the N CQIs comprise CSI and/or a CQI that correspond/corresponds to the first receiving state.

14. The method according to claim 10 or 11, wherein that the network device receives the information about the CSI and/or the CQIs in the at least two receiving states that is reported by the terminal device comprises:

receiving, by the network device, first CSI and/or a first CQI that correspond/corresponds to the antenna quantity in the first receiving state and second CSI and/or a second CQI that correspond/corresponds to an antenna quantity in a second receiving state that are reported by the terminal device, wherein the first CSI and/or the first CQI and the second CSI and/or the second CQI are obtained through calculation after the terminal device receives a CSI-RS by using the second receiving state, the first antenna quantity corresponding to the first receiving state is less than the second antenna quantity corresponding to the second receiving state, and the second antenna quantity is not greater than the maximum receive antenna quantity configured or supported by the terminal device.

15. The method according to any one of claims 10 to 14, wherein before the sending, by the network device to the terminal device when the minimum scheduling slot offset is greater than 0 and the network device needs to send a PDCCH to the terminal device, a PDCCH applicable to being received in the first receiving state, the method further comprises:
determining, by the network device, a parameter of the PDCCH applicable to being received in the first receiving state.

16. The method according to claim 15, wherein the network device determines, in the following manner, the parameter of the PDCCH applicable to the first receiving state:

determining, by the network device based on a predefined compensation factor, the parameter of the PDCCH applicable to the first receiving state;
determining, by the network device based on the compensation factor sent by the terminal device, the parameter of the PDCCH applicable to the first receiving state;
determining, by the network device based on the compensation factor configured by the network device, the parameter of the PDCCH applicable to the first receiving state; or
determining, by the network device based on information that is reported by the terminal device and that comprises the CSI and/or the CQI that correspond/corresponds to the first receiving state, the parameter of the PDCCH applicable to being received in the first receiving state.

17. A terminal device, comprising a processing unit and a communication unit, wherein

the communication unit is configured to receive a minimum scheduling slot offset indicated by a network device; and receive first indication information sent by the network device; or send second indication information to the network device, wherein the first indication information and/or the second indication information are/is used to determine a first receiving state used by the terminal device to detect a physical downlink control channel PDCCH; and
the processing unit is configured to detect the PDCCH by using the first receiving state when the minimum scheduling slot offset is greater than 0.

18. The terminal device according to claim 17, wherein the first receiving state indicates that the terminal device detects the PDCCH by using a first antenna quantity, wherein
the first antenna quantity is less than a maximum receive antenna quantity configured or supported by the terminal device.

19. The terminal device according to claim 17 or 18, wherein the first indication information comprises at least one of the following:

when the network device needs to send the PDCCH to the terminal device, the network device compensates for the to-be-sent PDCCH;
the terminal device reports information about at least two types of channel state information CSI and/or channel quality indicators CQIs; or
a compensation factor used to assist the network device in determining a parameter of the PDCCH.

20. The terminal device according to claim 17 or 18, wherein the second indication information indicates at least one of the following:

a compensation factor used to assist the network device in determining a parameter of the PDCCH;
information that is about CSI and/or CQIs in at least two receiving states and that is determined by the terminal device; or
the network device compensates for the PDCCH when sending the PDCCH to the terminal device.

21. The terminal device according to claim 18, wherein the processing unit is specifically configured to:

detect the PDCCH by using the first receiving state when the minimum scheduling slot offset is not less than Y, wherein
Y is time required for the terminal device to turn on and/or turn off an antenna.

22. The terminal device according to claim 19 or 20, wherein the processing unit is further configured to:

receive, by the terminal device, a signal state information reference signal CSI-RS by using the maximum receive antenna quantity configured or supported by the terminal device, and calculate N pieces of CSI and/or N CQIs that correspond to N receiving states; and
report, by the terminal device, the N pieces of CSI and/or N CQIs to the network device, wherein
the N receiving states comprise the first receiving state.

23. The terminal device according to claim 19 or 20, wherein the processing unit is further configured to:

receive, by the terminal device, a CSI-RS by using a second receiving state, and calculate first CSI and/or a first CQI that correspond/corresponds to the first receiving state and second CSI and/or a second CQI that correspond/corresponds to the second receiving state; and
use, by the terminal device, the first CSI and/or the first CQI and the second CSI and/or the second CQI as the CSI and/or the CQIs that are reported to the network device, wherein
the first receive antenna quantity corresponding to the first receiving state is less than a second antenna quantity corresponding to the second receiving state, and the second antenna quantity is not greater than the maximum receive antenna quantity configured or supported by the terminal device.

24. A network device, comprising a processing unit and a communication unit, wherein

the communication unit is configured to indicate a minimum scheduling slot offset to a terminal device; and receive second indication information sent by the terminal device; or send, by the network device, first indication information to the terminal device, wherein the first indication information and/or the second indication information are/is used to determine a first receiving state used by the terminal device to detect a physical downlink control channel PDCCH; and

the processing unit is configured to send, to the terminal device when the minimum scheduling slot offset is greater than 0 and the network device needs to send a PDCCH to the terminal device, a PDCCH applicable to being received in the first receiving state.

25. The network device according to claim 24, wherein the first receiving state indicates that the terminal device detects the PDCCH by using a first antenna quantity, wherein
the first antenna quantity is less than a maximum receive antenna quantity configured or supported by the terminal device.

26. The network device according to claim 24 or 25, wherein the first indication information comprises at least one of the following:

when the network device needs to send the PDCCH to the terminal device, the network device compensates for the to-be-sent PDCCH;
the terminal device reports information about at least two types of channel state information CSI and/or channel quality indicators CQIs; or
a compensation factor used to assist the network device in determining a parameter of the PDCCH.

27. The network device according to claim 24 or 25, wherein the second indication information indicates at least one of the following:

a compensation factor used to assist the network device in determining a parameter of the PDCCH;
information that is about CSI and/or CQIs in at least two receiving states and that is determined by the terminal device; or
the network device compensates for the PDCCH when sending the PDCCH to the terminal device.

28. The network device according to claim 25, wherein the processing unit is specifically configured to:

send, to the terminal device when the minimum scheduling slot offset is not less than Y and the network device needs to send the PDCCH to the terminal device, the PDCCH applicable to being received in the first receiving state, wherein
Y is time required for the terminal device to turn on and/or turn off an antenna.

29. The network device according to claim 27 or 28, wherein the processing unit is further configured to:

receive, by the network device, N pieces of CSI and/or N CQIs reported by the terminal device, wherein
the N pieces of CSI and/or the N CQIs are obtained through measurement after the terminal device receives a CSI-RS by using the configured or supported maximum receive antenna quantity, and the N pieces of CSI and/or the N CQIs comprise CSI and/or a CQI that correspond/corresponds to the first receiving state.

30. The network device according to claim 27 or 28, wherein the processing unit is further configured to:

receive, by the network device, first CSI and/or a first CQI that correspond/corresponds to the first antenna quantity and second CSI and/or a second CQI that correspond/corresponds to a second antenna quantity that are reported by the terminal device, wherein
the first CSI and/or the first CQI and the second CSI and/or the second CQI are obtained through calculation after the terminal device receives a CSI-RS by using a second receiving state, the first antenna quantity corresponding to the first receiving state is less than the second antenna quantity corresponding to the second receiving state, and the second antenna quantity is not greater than the maximum receive antenna quantity configured or supported by the terminal device.

31. The network device according to any one of claims 26 to 30, wherein the processing unit is further configured to:
determine a parameter of the PDCCH applicable to being received in the first receiving state.

32. The network device according to claim 31, wherein the processing unit determines, in the following manner, the parameter of the PDCCH applicable to the first receiving state:

determining, based on a predefined compensation factor, the parameter of the PDCCH applicable to the first receiving state;

determining, based on the compensation factor sent by the terminal device, the parameter of the PDCCH applicable to the first receiving state;

determining, based on the compensation factor configured by the network device, the parameter of the PDCCH applicable to the first receiving state; or

determining, based on information that is reported by the terminal device and that comprises the CSI and/or the CQI that correspond/corresponds to the first receiving state, the parameter of the PDCCH applicable to the first receiving state.

33. A terminal device, comprising a processor, a transceiver, and a memory, wherein

the memory is configured to store program instructions; and

the processor is configured to perform the method according to any one of claims 1 to 7 by using the transceiver by invoking the program instructions stored in the memory.

34. A network device, comprising a processor, a communication interface, and a memory, wherein

the memory is configured to store program instructions; and

the processor is configured to perform the method according to any one of claims 8 to 16 by using the communication interface by invoking the program instructions stored in the memory.

35. A computer-readable storage medium, storing computer-executable instructions, wherein the computer-executable instructions are used to enable a computer to perform the method according to any one of claims 1 to 7 or the method according to any one of claims 8 to 16.

36. A computer program product, comprising computer-executable instructions, wherein the computer-executable instructions are used to enable a computer to perform the method according to any one of claims 1 to 7 or the method according to any one of claims 8 to 16.

Terminal device 101                    Network device 100

FIG. 1

☐ PDCCH

■ PDSCH

PDCCH carrying
scheduling information
(PDCCH with grant)

Obtain no PDCCH
through detection
(PDCCH only)

Obtain no PDCCH
through detection
(PDCCH only)

A receive antenna
quantity is 2, and a
minimum scheduling slot
offset minimum K0 is 1

Timer Timer

The receive antenna
quantity rolls back to 2,
and the minimum
scheduling slot offset
minimum K0 is 1

Time Time

The receive antenna quantity is 4, and the
minimum scheduling slot offset minimum K0 is 0

FIG. 2

| Terminal | | Network device |
|---|---|---|

S300: The network device indicates a minimum scheduling slot offset to the terminal device

S301: Receive the minimum scheduling slot offset sent by the network device

S302: Send indication information to the terminal device

S302: Send indication information to the network device

S303: Detect a PDCCH by using a first receiving state when the minimum scheduling slot offset is greater than 0

S304: Send, to the terminal device when the minimum scheduling slot offset is greater than 0 and the network device needs to send a PDCCH to the terminal device, a PDCCH applicable to being received in the first receiving state

FIG. 3

Block error rate BLER

4RX        2RX

1%

0          SNR 1      SNR 2          SNR

FIG. 4

```
┌─────────────────┐                              ┌─────────────────┐
│    Terminal     │                              │ Network device  │
└─────────────────┘                              └─────────────────┘
         │                                                │
         │   S500: The network device notifies the        │
         │    device of a minimum scheduling slot offset   │
         │◄───────────────────────────────────────────────│
┌────────────────────────┐                               │
│ S501: Receive the minimum│                              │
│ scheduling slot offset sent by the│                     │
│      network device    │                                │
└────────────────────────┘                               │
         │                                                │
         │   S502: Send network side indication           │
         │    information 1 to the terminal device         │
         │◄───────────────────────────────────────────────│
┌────────────────────────┐                               │
│ S503: Receive the network side│                         │
│ indication information 1 sent by the│                   │
│      network device    │                                │
└────────────────────────┘                               │
┌────────────────────────┐                               │
│ S504: Switch a current receiving state│                 │
│  of receiving a PDCCH to a first│                       │
│ receiving state when determining that│                  │
│ the minimum scheduling slot offset is│                  │
│       not less than Y  │                                │
└────────────────────────┘                               │
┌────────────────────────┐                               │
│ S505: Detect, by using the first│                       │
│ receiving state, the PDCCH sent by the│                 │
│      network device    │                                │
└────────────────────────┘         ┌─────────────────────────────┐
         │                         │ Step 506: Compensate, based on a│
         │                         │ compensation factor in the network side│
         │                         │ indication information 1, for the PDCCH│
         │                         │ that needs to be sent to the terminal device,│
         │                         │ to determine a parameter of the PDCCH│
         │                         └─────────────────────────────┘
         │   S507: Send the PDCCH to the terminal device  │
         │    based on the parameter of the PDCCH          │
         │◄───────────────────────────────────────────────│
         │                                                │
```

FIG. 5

```
┌─────────────────┐                              ┌─────────────────┐
│    Terminal     │                              │ Network device  │
└─────────────────┘                              └─────────────────┘
         │                                                │
         │   S600: The network device notifies the        │
         │      terminal device of a minimum              │
         │         scheduling slot offset                 │
         │◄───────────────────────────────────────────────┤
┌──────────────────────────────┐                          │
│ S601: Receive the minimum     │                         │
│ scheduling slot offset sent   │                         │
│ by the network device         │                         │
└──────────────────────────────┘                          │
         │       S602: Send network side indication        │
         │      information 2 to the terminal device        │
         │◄───────────────────────────────────────────────┤
┌──────────────────────────────┐                          │
│ S603: Receive the network     │                         │
│ side indication information 2 │                         │
│ sent by the network device    │                        │
└──────────────────────────────┘                          │
┌──────────────────────────────┐                          │
│ S604: Switch a receiving       │                        │
│ state of detecting a PDCCH to  │                        │
│ a first receiving state when   │                        │
│ determining that the minimum   │                        │
│ scheduling slot offset is not  │                        │
│ less than Y                    │                        │
└──────────────────────────────┘                          │
┌──────────────────────────────┐                          │
│ S605: Receive a CSI-RS by      │                        │
│ using a receive antenna         │                       │
│ quantity in a second receiving │   ┌──────────────────────────────┐
│ state, measure CSI or a CQI    │   │ S606: Receive information       │
│ that corresponds to the second │   │ about the CSI or the CQIs      │
│ receiving state and CSI or a   │   │ measured by using two          │
│ CQI that corresponds to the    │   │ antenna quantities and         │
│ first receiving state, and feed│   │ reported by the terminal       │
│ back a measurement result to   │   │ device                         │
│ the network device             │   └──────────────────────────────┘
└──────────────────────────────┘                          │
         │                          ┌──────────────────────────────┐
         │                          │ S607: Determine, based on the  │
         │                          │ CSI or the CQI that            │
         │                          │ corresponds to the first       │
         │                          │ receiving state, a parameter   │
         │                          │ of the PDCCH to be sent to     │
         │                          │ the terminal device            │
         │                          └──────────────────────────────┘
         │                                                │
```

FIG. 6

```
┌─────────────────┐                              ┌─────────────────┐
│    Terminal     │                              │ Network device  │
└─────────────────┘                              └─────────────────┘
         │                                                │
         │      S700: The network device notifies the     │
         │      terminal device of a minimum scheduling   │
         │◄─────────────── slot offset ───────────────────│
┌────────────────────────────┐                            │
│ S701: Receive the minimum  │                            │
│ scheduling slot offset     │                            │
│ sent by the network device │                            │
└────────────────────────────┘                            │
         │     S702: Send terminal side indication         │
         │─────── information to the network device ──────►│
         │                              ┌──────────────────────────────────┐
         │                              │ S703: Receive the terminal side  │
         │                              │ indication information sent by   │
         │                              │ the terminal device              │
         │                              └──────────────────────────────────┘
┌──────────────────────────────┐                          │
│ S704: Switch a receiving      │                          │
│ state of detecting a PDCCH    │                          │
│ to a first receiving state    │                          │
│ when determining that the     │                          │
│ minimum scheduling slot offset│                          │
│ is not less than Y            │                          │
└──────────────────────────────┘                          │
         │                              ┌──────────────────────────────────┐
         │                              │ S705: After the network device   │
         │                              │ receives the terminal side       │
         │                              │ indication information sent by    │
         │                              │ the terminal device, when the    │
         │                              │ PDCCH needs to be sent to the    │
         │                              │ terminal device, the network     │
         │                              │ device adjusts the PDCCH to be   │
         │                              │ sent to the terminal device      │
         │                              └──────────────────────────────────┘
         │  S706: Send the PDCCH to the terminal device    │
         │◄───────────────────────────────────────────────│
         │                                                │
```

FIG. 7

800

801

Processor

Memory

802

Bus interface

Transceiver

FIG. 8

900

901

902

Processing unit

Storage unit

Communication unit

900

901

902

Processing unit

Storage unit

Communication unit

900

901

902

Processing unit

Storage unit

Communication unit

FIG. 9

1000

Processor

1003

1001

Memory

1002

Communication
interface

FIG. 10

1100

Processing
unit

1101

Storage unit

1102

Communication
unit

1100

Processing
unit

1101

Storage unit

1102

Communication
unit

1100

Processing
unit

1101

Storage unit

1102

Communication
unit

FIG. 11

<div align="center">

**INTERNATIONAL SEARCH REPORT**

</div>

| International application No. |
|---|
| **PCT/CN2020/106443** |

| **A.** | **CLASSIFICATION OF SUBJECT MATTER** |
|---|---|
| | H04W 72/12(2009.01)i |

According to International Patent Classification (IPC) or to both national classification and IPC

| **B.** | **FIELDS SEARCHED** |
|---|---|

Minimum documentation searched (classification system followed by classification symbols)

H04W;H04L

Documentation searched other than minimum documentation to the extent that such documents are included in the fields searched

Electronic data base consulted during the international search (name of data base and, where practicable, search terms used)

CNABS; CNTXT; CNKI; VEN; EPTXT; USTXT; WOTXT; 3GPP: 调度, 时隙, 偏移, PDSCH, PDCCH, 检测, 监测, 探测, 接收, 天线, 数量, 增加, 减少, 节能, 功耗, 耗能, 节约, 补偿, 指示, schedule, slot, offset, detect, monitor, receive, antenna, number, add, reduce, save, energy, consume, compensate, indicate

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | WO 2020089267 A1 (TELEFONAKTIEBOLAGET LM ERICSSON (PUBL)) 07 May 2020 (2020-05-07)<br>claims 1-31 | 1-36 |
| X | QUALCOMM INC. "3GPP TSG-RAN WG1 Meeting #94bis R1-1811282"<br>*UE Adaptation to the Traffic and UE Power Consumption Characteristics,*<br>12 October 2018 (2018-10-12),<br>full text, part 2.3 | 1-36 |
| X | HUAWEI et al. "3GPP TSG RAN WG1 Meeting #94bis R1-1810154"<br>*Power consumption reduction based on time/frequency/antenna adaptation,*<br>12 October 2018 (2018-10-12),<br>full text, part 2.3 | 1-36 |
| X | ERICSSON. "3GPP TSG-RAN WG1 Meeting #94bis Tdoc R1-1811501"<br>*Adaptation aspects of NR UE power saving,* 12 October 2018 (2018-10-12),<br>full text, parts 2 and 4 | 1-36 |
| A | CN 108347277 A (GUANGDONG OPPO MOBILE TELECOMMUNICATIONS CORP., LTD.) 31 July 2018 (2018-07-31)<br>entire document | 1-36 |

| ☑ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 September 2020** | **24 September 2020** |

| Name and mailing address of the ISA/CN | Authorized officer |
|---|---|
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/106443**

| C. | DOCUMENTS CONSIDERED TO BE RELEVANT | |
|---|---|---|
| Category* | Citation of document, with indication, where appropriate, of the relevant passages | Relevant to claim No. |
| A | WO 2018152153 A1 (INTEL IP CORP) 23 August 2018 (2018-08-23)<br>entire document | 1-36 |
| A | US 2015373668 A1 (LG ELECTRONICS INC.) 24 December 2015 (2015-12-24)<br>entire document | 1-36 |

Form PCT/ISA/210 (second sheet) (January 2015)

## INTERNATIONAL SEARCH REPORT
### Information on patent family members

International application No.

**PCT/CN2020/106443**

| Patent document cited in search report | | | Publication date (day/month/year) | Patent family member(s) | | | Publication date (day/month/year) |
|---|---|---|---|---|---|---|---|
| WO | 2020089267 | A1 | 07 May 2020 | None | | | |
| CN | 108347277 | A | 31 July 2018 | None | | | |
| WO | 2018152153 | A1 | 23 August 2018 | EP | 3583705 | A1 | 25 December 2019 |
| US | 2015373668 | A1 | 24 December 2015 | WO | 2014042373 | A1 | 20 March 2014 |
| | | | | US | 9900863 | B2 | 20 February 2018 |

Form PCT/ISA/210 (patent family annex) (January 2015)

**REFERENCES CITED IN THE DESCRIPTION**

**Patent documents cited in the description**

- CN 201910711769